(19) Europäisches Patentamt
European Patent Office
Office européen des brevets

(11) EP 3 401 909 A1

(12) # EUROPÄISCHE PATENTANMELDUNG

(43) Veröffentlichungstag:
**14.11.2018 Patentblatt 2018/46**

(51) Int Cl.:
***G11B 7/24044*** *(2013.01)* ***G03H 1/02*** *(2006.01)*
***B42D 25/328*** *(2014.01)*

(21) Anmeldenummer: **17170199.8**

(22) Anmeldetag: **09.05.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **FOLIENAUFBAU ENTHALTEND EINE PHOTOPOLYMERSCHICHT ZUR HOLOGRAPHISCHEN BELICHTUNG UND EINE LACKSCHICHT HOHER BESTÄNDIGKEIT**

(57) Die Erfindung betrifft einen Schichtaufbau umfassend eine härtbare Schutzschicht C und eine Photopolymerschicht B, ein Verfahren zur Herstellung eines solchen Schichtaufbaus, ein Verfahren zur Herstellung eine Hologramms unter Verwendung eines solchen Schichtaufbaus, ein versiegeltes holographisches Medium und die Verwendung eines solchen Schichtaufbaus zur Herstellung eines Hologramms.

EP 3 401 909 A1

## Beschreibung

Die Erfindung betrifft einen Schichtaufbau umfassend eine härtbare Schutzschicht C und eine Photopolymerschicht B, ein Verfahren zur Herstellung eines solchen Schichtaufbaus, ein Verfahren zur Herstellung eines Hologramms unter Verwendung eines solchen Schichtaufbaus, ein versiegeltes holographisches Medium und die Verwendung eines solchen Schichtaufbaus zur Herstellung eines Hologramms.

Photopolymerschichten zur Herstellung holographischer Medien sind grundsätzlich z.B. aus der WO 2011/054797 und der WO 2011/067057 bekannt. Vorteile dieser holografischen Medien sind deren hohe diffraktive Lichtbeugungseffizienz und eine vereinfachte Verarbeitung, da nach der holografischen Belichtung keine weiteren chemischen und / oder thermischen Entwicklungsschritte nötig sind.

Der holographische Film (Bayfol® HX der Fa. Covestro Deutschland AG) besteht aus einem Filmsubstrat (A) und einer lichtempfindlichen Photopolymerschicht (B). Optische Hologramme werden in der Schicht (B) durch lokale Photopolymerisation gebildet und durch flächige UV-VIS-Belichtung fixiert. So entsteht aus der Schicht (B) eine nicht mehr photoempfindliche durchpolymerisierte Schicht (B') mit einem vorher eingeschriebenen Hologramm. Dieses Hologramm ist zwar an sich auf Dauer sehr stabil, kann aber durch mechanische Einflüsse und / oder bei Kontakt mit z.B. organischen Substanzen (Lösungsmitteln) seine Eigenschaften verändern.

Denkbare Schutz-Methoden sind dabei Lackieren, Laminieren, Aufkleben einer Schutzschicht und / oder einer Schutzfolie. Es entstehen jedoch mannigfaltige Probleme beim klassischen Lackieren oder bei dem Aufkleben verbunden mit flüssigen Lack und / oder Kleber-Komponenten, die bei dem Kontakt mit der (B')-Schicht das Hologramm ganz zerstören oder aufgrund starker optischer Verschiebung unbrauchbar machen.

In den Patentanmeldungen EP 2613318 A1 und EP 2962302 A1 ist beschrieben, dass durch geeignete Auswahl der Komponenten Schutzschichten auf eine belichtete Photopolymerschicht aufgebracht werden können. Diese Schutzschichten lassen sich durch Umsetzung wenigstens eines strahlungshärtenden Harzes I), eines Isocyanat-funktionellen Harzes II) und eines Photoinitiatorsystem III) herstellen.

In der Patentanmeldung EP 2772917 A1 ist ein Schichtaufbau aus mindestens einer Schutzschicht und mindestens einer belichteten Photopolymerschicht beschrieben. Die Schutzschicht wird dabei als wässrige strahlenhärtbare Polymerdispersion auf die belichtete Photopolymerschicht aufgebracht und dann ausgehärtet.

Die in den Patentanmeldungen EP 2613318 A1, EP 2962302 A1 und EP 2772917 A1 beschriebenen Schichtaufbauten weisen zwar eine Schutzschicht auf der Photopolymerschicht auf, die die optischen Eigenschaften der belichteten Photopolymerschicht möglichst wenig beeinflusst, allerdings werden diese Schutzschichten immer erst nachträglich auf die belichtete Photopolymerschicht aufgetragen, sodass die unbelichtete Photopolymerschicht immer noch schädlichen Umwelteinflüssen ausgesetzt ist.

Die Patentanmeldung EP 2786378 A1 offenbart Schichtaufbauten aus einer unbelichteten Photopolymerschicht und einer Schutzschicht. Die Schutzschicht wird hierzu "nass" d.h. als Lösung oder Dispersion auf die unbelichtete Photopolymerschicht aufgebracht. Es ist jedoch in der industriellen Praxis aufwendig, entsprechende Flüssigapplikationsanlagen aufzubauen und Personal bereitzustellen, das den Beschichtungsprozess kontrolliert. Laminierungsverfahren werden daher bevorzugt, haben aber den Nachteil, dass sie oft zu Folienverbünden mit nicht ausreichender Haftung führen.

Es ist damit wünschenswert, das eine Schutzschicht (C) die folgenden Anforderungen erfüllt:

- die Photoempfindlichkeit der Photopolymerschicht (B) darf weder spektral noch hinsichtlich der Dosis beeinflusst werden.
- Die eingeschriebenen Hologramme in einen Folienaufbaus A-B-C-D sollen im identischen Aufbau und mit nur minimal abweichender Qualität im Filmaufbau A-B-C-D so eingeschrieben werden, wie es im Aufbau A-B (Bayfol HX) ohne jegliche Schutzschichten geschieht.
- Optisches Fixieren des Hologramms durch UV/VIS-Belichtung soll die Schutzschicht (C) ebenfalls komplett aushärten und die Schicht (C') bilden.
- Die ausgehärtete Schutzschicht (C') soll auf der holographischen Schicht (B') sehr gut haften und zwar so gut, dass der Substratfilm (D) von dem A-B'-C'-Aufbau rückstandsfrei und ohne Delamination der Schicht B'-C' abgezogen werden kann.
- Als äußere Schicht des Schichtaufbaus soll die Schicht (C') eine dauerhafte Beständigkeit gegen gängige organische Lösungsmittel, wässrigen Säuren und Laugen, Kosmetika, Haushalts- und Industriereinigungsmittel und / oder eine ausreichende Kratzbeständigkeit gegen mechanische Einflüsse sicherstellen.

Aufgabe der vorliegenden Erfindung war es einen Schichtaufbau bereitzustellen, indem bereits die unbelichtete Photopolymerschicht durch eine Schutzschicht geschützt ist, ohne dabei ihre Photoempfindlichkeit zu beeinflussen, die Schutzschicht nachträglich ausgehärtet werden kann und die ausgehärte Schutzschicht eine dauerhafte Beständigkeit gegen gängige organische Lösungsmittel, wässrige Säuren und Laugen, Kosmetika, Haushalts- und Industriereinigungsmittel und / oder eine ausreichende Kratzbeständigkeit gegen mechanische Einflüsse sicherstellt.

Diese Aufgabe wird gelöst durch einen Schichtaufbau umfassend eine härtbare Schutzschicht C und einer mit der Schutzschicht C zumindest teilweise verbundenen, flächig vorliegenden Photopolymerschicht B, dadurch gekennzeichnet, dass die Schutzschicht C

I) mindestens ein thermoplastisches Harz ausgewählt aus der Gruppe bestehend aus Polyvinylbutyral mit $M_w \geq$ 100.000 g/mol oder amorphem Polymethylmethacrylat mit $M_w \geq$ 100.00000.000 g/mol;
II) mindestens einen Reaktivverdünner ausgewählt aus der Gruppe bestehend aus Pentaerythrit-triacrylat, Dipentaerythritpentaacrylat, Dipentaerythrithexaacrylat, Verbindung gemäß Formel (Ia)

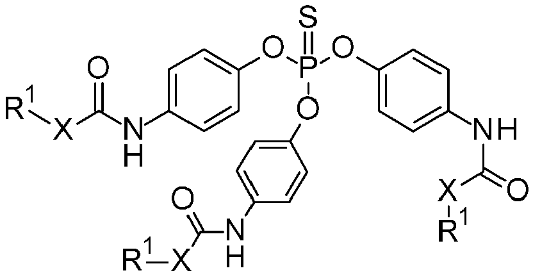

Formel (Ia),

Verbindung gemäß Formel (Ib)

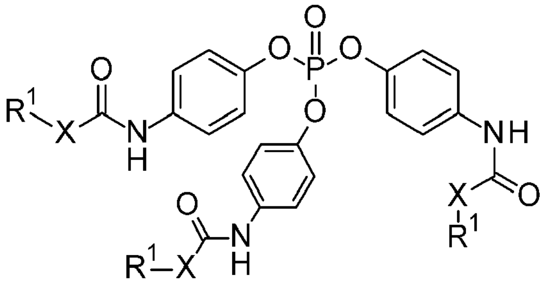

Formel (Ib),

Verbindung gemäß Formel (Ic)

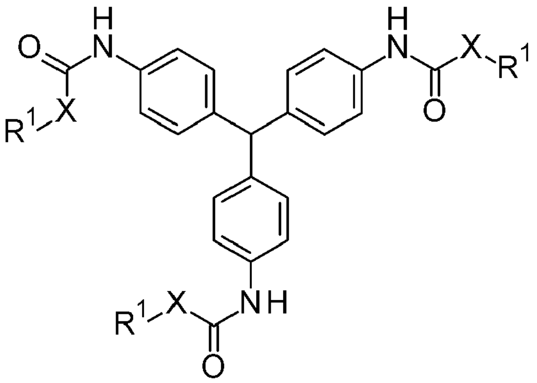

Formel (Ic),

wobei in den Formeln (Ia) bis (Ic)

$R^1$ unabhängig voneinander jeweils eine strahlenhärtbare Gruppe ist und
X unabhängig voneinander jeweils eine Einfachbindung zwischen $R^1$ und C=O oder ein linearer, verzweigter

oder cyclischer gegebenenfalls heteroatomhaltiger und/oder gegebenenfalls durch funktionelle Gruppen substituierter Kohlenwasserstoffrest ist,

Verbindung gemäß Formel (II)

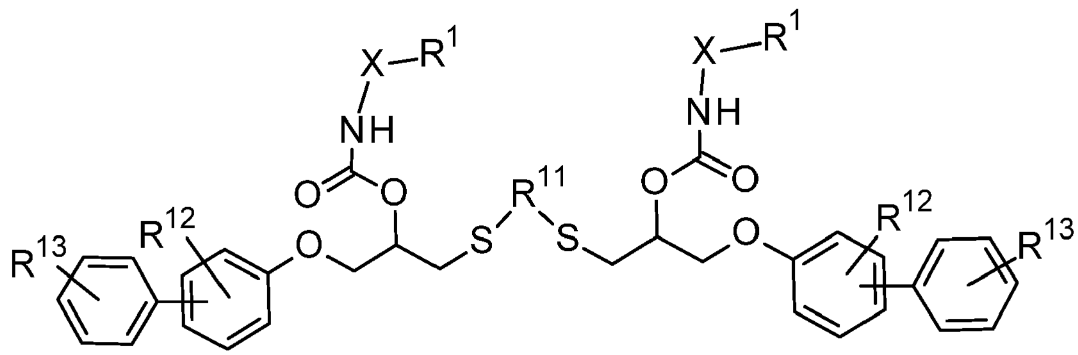

Formel (II),
wobei in der Formel (II)

$R^1$ und X wie in Formel (Ia) - (Ic) definiert ist,
$R^{11}$ ein linearer oder verzweigter, gegebenenfalls mit Heteroatomen substituierter aliphatischer, aromatischer oder araliphatischer Rest ist,
$R^{12}$ jeweils unabhängig voneinander bis zu vier Substituenten ausgewählt aus Methyl, Ethyl, Propyl, n-Butyl, tert.-Butyl, Chlor, Brom, Iod, Methylthio, Phenyl und / oder Phenylthio ist,
$R^{13}$ jeweils unabhängig voneinander bis zu fünf Substituenten ausgewählt aus Methyl, Ethyl, Propyl, n-Butyl, tert.-Butyl, Chlor, Brom, Iod, Methylthio, Phenyl und / oder Phenylthio ist,

Verbindung gemäß Formel (III)

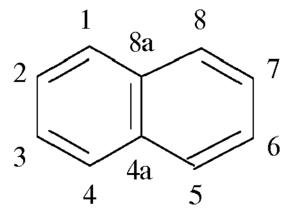

Formel (III),

i) die an wenigstens einem der Kohlenstoffatome 1, 2, 3, 4, 5, 6, 7, 8 mit einem Rest $R_{Acryl}$ der Formel (IV) substituiert ist,

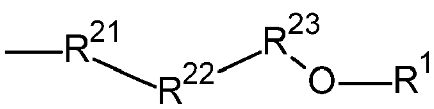

Formel (IV),

wobei in der Formel (IV)

$R^1$ wie in Formel (Ia) - (Ic) definiert ist,
$R^{21}$ Sauerstoff oder Schwefel ist,
$R^{22}$ eine Carbonamid (-C(O)N-) oder eine Carbonester (-C(O)O-) oder eine Sulfonamid ($-SO_2N-$) Gruppe ist,
$R^{23}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist, und

ii) die Verbindung der Formel (III) an wenigstens einem weiteren Kohlenstoffatom 1, 2, 3, 4, 5, 6, 7, 8 mit einem Rest der Formel (V) substituiert ist,

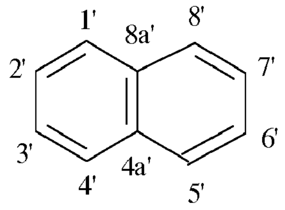

Formel (V),

wobei in der Formel (V)
die Kohlenstoffatome der Verbindung der Formel (V) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer beliebig substituierten Carbamoyl-Gruppe, die auch verbrückend an einen Rest der Formel (III) gebunden sein kann, oder einer Trifluormethyl-Gruppe oder einer Trifluormethoxy-Gruppe oder einem Rest $R_{Acryl'}$ der Formel (VI),

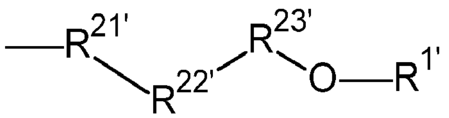

Formel (VI),

wobei in der Formel (VI)

$R^{1'}$ wie $R^1$ in Formel (IV) definiert ist,
$R^{21'}$ Sauerstoff oder Schwefel ist,
$R^{22'}$ eine Carbonamid (-C(O)N-) oder eine Carbonester (-C(O)O-) oder eine Sulfonamid ($-SO_2N-$) Gruppe ist,
$R^{23'}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist,

iii) die übrigen Kohlenstoffatome der Verbindung der Formel (III) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer Trifluormethyl-Gruppe oder einer Trifluormethoxy-Gruppe substituiert sind, und

Verbindung der Formel (VII)

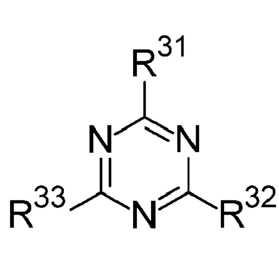

(VII),

wobei in der Formel (VII)
$R^{31}$, $R^{32}$, $R^{33}$ jeweils unabhängig voneinander OH, Halogen oder ein organischer Rest sind, wobei wenigstens einer der Reste ein eine strahlungshärtende Gruppe aufweisender organischer Rest ist; und
III) mindestens einen Photoinitiator umfasst.

Der Vorteil des erfindungsgemäßen Schichtaufbaus besteht darin, dass hierdurch bereits eine Versiegelung der unbelichteten Photopolymerschicht ermöglicht wird, ohne die Photoempfindlichkeit der Photopolymerschicht weder

spektral noch hinsichtlich der benötigten Dosis für das Schreiben von Hologrammen in das Photopolymer negativ zu beeinflussen. Ferner wird durch das "trockene" Aufbringen der Schutzschicht auf die unbelichtete Photopolymerschicht die Bereitstellung von aufwändigen Maschinen und besonders geschultem Personal, wie beispielsweise zur "Nass"-Lackierung erforderlich, vermieden. Vorteilhaft ist weiterhin, dass beim optisches Fixieren des Hologramms durch UV/VIS-Belichtung die Schutzschicht ebenfalls aushärtet, sodass keine weiteren Arbeitsschritte erforderlich sind. Aufgrund der sehr guten Haftung der ausgehärteten Schutzschicht an der Photopolymerschicht kann nicht nur die ggf. vorhandene Substratschicht D rückstandsfrei abgezogen werden, sondern es wird auch eine dauerhafte Beständigkeit gegen gängige organische Lösungsmittel, wässrige Säuren und Laugen, Kosmetika, Haushalts- und Industriereinigungsmittel und / oder eine ausreichende Kratzbeständigkeit gegen mechanische Einflüsse sichergestellt.

Unter "flächig vorliegend" im Sinne der Erfindung wird eine Ausgestaltung als ebene Fläche oder auch als konkav oder konvex gewölbte oder wellige Fläche verstanden. Im Sinne der Erfindung muss das das Hologramm enthaltende Photopolymer B insofern eine ebene, gewölbte oder gewellte Fläche aufweisen, damit eine Auflaminierung der Versiegelungsschicht zumindest im Bereich des Hologramms möglich wird.

Reaktivverdünner im Sinne der Erfindung sind vorzugsweise Verbindungen, die die Anfangsviskosität der härtbaren Zusammensetzung herabsetzen und im Verlauf der Härtung der härtbaren Zusammensetzung mit dem thermoplastischem Harz und Härter eine chemische Bindung eingehen und dabei ein Netzwerk ausbilden.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyisocyanat" gesprochen wird, ist das Wort "ein" lediglich als unbestimmter Artikel und nicht als Zahlwort aufzufassen, es ist also damit auch eine Ausführungsform umfasst, in der zwei oder mehr Polyisocyanate vorhanden sind, die sich beispielsweise strukturell unterscheiden.

In einer weiteren Ausführungsform liegt die Photopolymerschicht B auf einer Substratschicht A vor, wobei die Photopolymerschicht B auf einer Seite zumindest teilweise mit der Substratschicht A verbunden ist und die Photopolymerschicht B auf der anderen Seite zumindest teilweise mit der Schutzschicht C verbunden ist.

In einer weiteren Ausführungsform liegt die Schutzschicht C auf einer Substratschicht D vor, wobei die Schutzschicht C auf einer Seite zumindest teilweise mit der Substratschicht D verbunden ist und die Schutzschicht C auf der anderen Seite zumindest teilweise mit der Photopolymerschicht B verbunden ist.

In einer weiteren Ausführungsform liegt die Photopolymerschicht B auf einer Substratschicht A vor, wobei die Photopolymerschicht B auf einer Seite zumindest teilweise mit der Substratschicht A verbunden ist und die Photopolymerschicht B auf der anderen Seite zumindest teilweise mit der Schutzschicht C verbunden ist, und die Schutzschicht C liegt auf einer Substratschicht D vor, wobei die Schutzschicht C auf einer Seite zumindest teilweise mit der Substratschicht D verbunden ist und die Schutzschicht C auf der anderen Seite zumindest teilweise mit der Photopolymerschicht B verbunden ist. Die Schichten sind dabei in der Reihenfolge A-B-C-D angeordnet.

In einer weiteren Ausführungsform besteht der erfindungsgemäße Schichtaufbau aus mindestens vier zumindest teilweise miteinander verbunden Schichten, wobei die Schichten in der Reihenfolge Substratschicht A, Photopolymerschicht B, Schutzschicht C und Substratschicht D unmittelbar aufeinander angeordnet sind.

In einer weiteren Ausführungsform weist die Schutzschicht C eine Dicke von 1 bis 100 μm, bevorzugt von 2 bis 50 μm und ganz besonders bevorzugt von 3 bis 25 μm auf.

In einer weiteren Ausführungsform enthält die Schutzschicht C einen UV-Absorber, vorzugsweise in einer Menge von 0.01 bis 10 Gew.-%, bevorzugter in einer Menge von 0.1 bis 5 Gew.-%, jeweils bezogen auf das Gesamtgewicht der Schutzschicht C.

In einer weiteren Ausführungsform ist der Reaktivverdünner Pentaerythrit-triacrylat, eine Verbindung gemäß Formel (Ia), (Ib), (Ic), (II), (III), (VII) und/oder Mischungen davon, vorzugsweise Pentaerythrit-triacrylat und eine Verbindung gemäß Formel (Ia) und/oder Mischungen davon, noch bevorzugter eine Verbindung gemäß Formel (Ia)

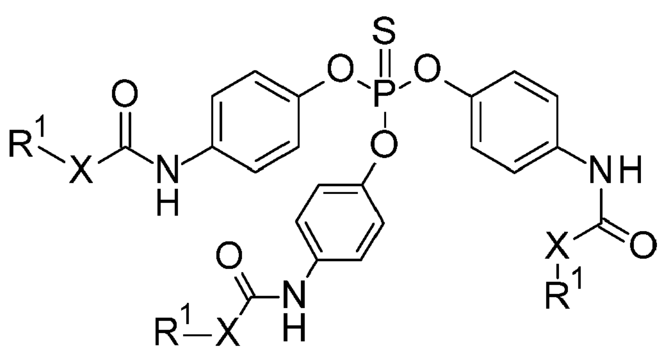

Formel (Ia),

wobei

$R^1$ unabhängig voneinander jeweils eine strahlenhärtbare Gruppe und

X unabhängig voneinander jeweils eine Einfachbindung zwischen $R^1$ und C=O oder ein linerer, verzweigter oder cyclischer gegebenenfalls heteroatomhaltiger und/oder gegebenenfalls durch funktionelle Gruppen substituierter Kohlenwasserstoffrest ist, und/oder Mischungen davon.

In einer weiteren Ausführungsform enthält die Photopolymerschicht B Polyurethan-Matrixpolymere, Acrylat-Schreibmonomere und Photoinitiatoren, vorzugsweise sind die Matrixpolymere vernetzt, noch bevorzugter sind die Matrixpolymere dreidimensional vernetzt.

Ebenfalls Gegenstand der Erfindung ist ein Verfahren zur Herstellung des erfindungsgemäßen Schichtaufbaus, wobei auf eine Photopolymerschicht B, eine Schutzschicht C aufgebracht wird, dadurch gekennzeichnet, dass die Schutzschicht C

I) mindestens ein thermoplastisches Harz ausgewählt aus der Gruppe bestehend aus Polyvinylbutyral mit $M_w \geq$ 100.00000.000 g/mol oder amorphem Polymethylmethacrylat mit $M_w \geq$ 100.00000.000 g/mol;

II) mindestens einen Reaktivverdünner ausgewählt aus der Gruppe bestehend aus Pentaerythrit-triacrylat, Dipentaerythritpentaacrylat, Dipentaerythrithexaacrylat, Verbindung gemäß Formel (Ia)

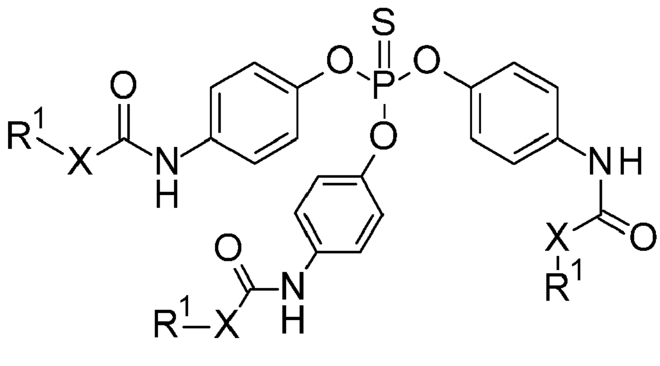

Formel (Ia),

Verbindung gemäß Formel (Ib)

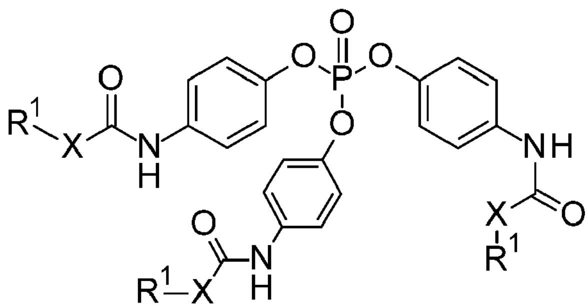

Formel (Ib),

Verbindung gemäß Formel (Ic)

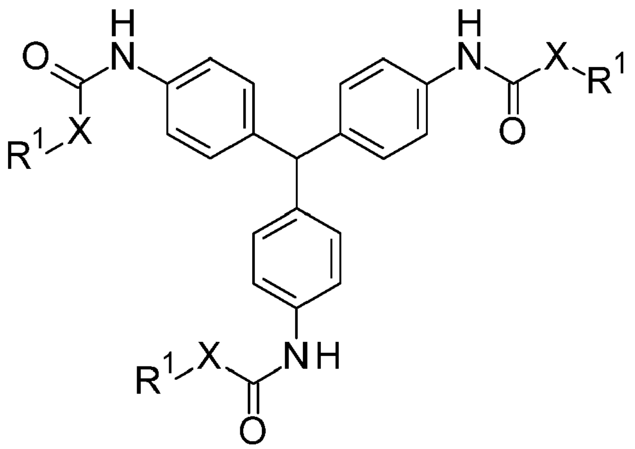

Formel (Ic),

wobei in den Formeln (Ia) bis (Ic)

$R^1$ unabhängig voneinander jeweils eine strahlenhärtbare Gruppe ist und
X unabhängig voneinander jeweils eine Einfachbindung zwischen $R^1$ und
C=O oder ein linearer, verzweigter oder cyclischer gegebenenfalls heteroatomhaltiger und/oder gegebenenfalls durch funktionelle Gruppen substituierter Kohlenwasserstoffrest ist,

Verbindung gemäß Formel (II)

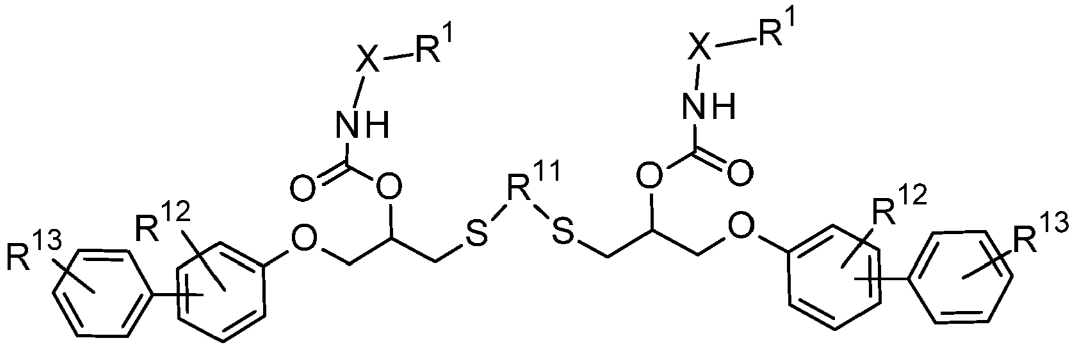

Formel (II),

wobei in der Formel (II)

$R^1$ und X wie in Formel (Ia) - (Ic) definiert ist,
$R^{11}$ ein linearer oder verzweigter, gegebenenfalls mit Heteroatomen substituier-ter aliphatischer, aromatischer oder araliphatischer Rest ist,
$R^{12}$ jeweils unabhängig voneinander bis zu vier Substituenten ausgewählt aus Methyl, Ethyl, Propyl, n-Butyl, tert.-Butyl, Chlor, Brom, Iod, Methylthio, Phenyl und / oder Phenylthio ist,
$R^{13}$ jeweils unabhängig voneinander bis zu fünf Substituenten ausgewählt aus Methyl, Ethyl, Propyl, n-Butyl, tert.-Butyl, Chlor, Brom, Iod, Methylthio, Phenyl und / oder Phenylthio ist,

Verbindung gemäß Formel (III)

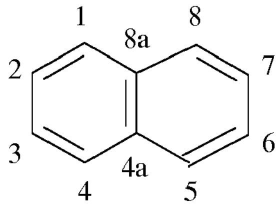

Formel (III),

i) die an wenigstens einem der Kohlenstoffatome 1, 2, 3, 4, 5, 6, 7, 8 mit einem Rest $R_{Acryl}$ der Formel (IV) substituiert ist,

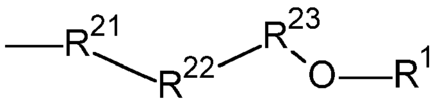

Formel (IV),

wobei in der Formel (IV)

$R^1$ wie in Formel (Ia) - (Ic) definiert ist,
$R^{21}$ Sauerstoff oder Schwefel ist,
$R^{22}$ eine Carbonamid (-C(O)N-) oder eine Carbonester (-C(O)O-) oder eine Sulfonamid ($-SO_2N-$) Gruppe ist,
$R^{23}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist,

und
ii) die Verbindung der Formel (III) an wenigstens einem weiteren Kohlenstoffatom 1, 2, 3, 4, 5, 6, 7, 8 mit einem Rest der Formel (V) substituiert ist,

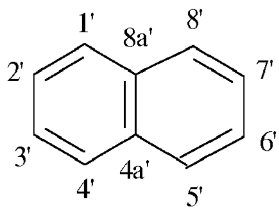

Formel (V),

wobei in der Formel (V)
die Kohlenstoffatome der Verbindung der Formel (V) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer beliebig substituierten Carbamoyl-Gruppe, die auch verbrückend an einen Rest der Formel (III) gebunden sein kann, oder einer Trifluormethyl-Gruppe oder einer Trifluormethoxy-Gruppe oder einem Rest $R_{Acryl'}$ der Formel (VI),

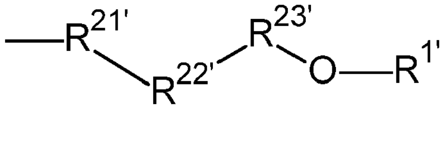

Formel (VI),

wobei in der Formel (VI)

$R^{1'}$ wie $R^1$ in Formel (IV) definiert ist,
$R^{21'}$ Sauerstoff oder Schwefel ist,

$R^{22'}$ eine Carbonamid (-C(O)N-) oder eine Carbonester (-C(O)O-) oder eine Sulfonamid ($-SO_2N-$) Gruppe ist, $R^{23'}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist,

iii) die übrigen Kohlenstoffatome der Verbindung der Formel (III) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer Trifluormethyl-Gruppe oder einer Trifluormethoxy-Gruppe substituiert sind, und Verbindung der Formel (VII)

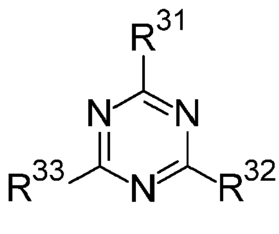

(VII),

wobei in der Formel (VII)
$R^{31}$, $R^{32}$, $R^{33}$ jeweils unabhängig voneinander OH, Halogen oder ein organischer Rest sind, wobei wenigstens einer der Reste ein eine strahlungshärtende Gruppe aufweisender organischer Rest ist; und

III) mindestens einen Photoinitiator umfasst.

In einer Ausführungsform des erfindungsgemäßen Verfahrens liegt die Photopolymerschicht B auf einer Substratschicht A oder einen anderen Träger wie z.B. Glas oder Kunststoff vor.

In einer Ausführungsform des erfindungsgemäßen Verfahrens liegt die Schutzschicht C auf einer Substratschicht D vor

In einer Ausführungsform des erfindungsgemäßen Verfahrens liegt die Photopolymerschicht B auf einer Substratschicht A oder einen anderen Träger wie z.B. Glas oder Kunststoff vor und die Schutzschicht C liegt auf einer Substratschicht D vor.

In einer Ausführungsform der Erfindung dient das erfindungsgemäße Verfahren zur Herstellung eines Schichtaufbaus wobei die Photopolymerschicht B auf einer Substratschicht A vorliegt, wobei die Photopolymerschicht B auf einer Seite zumindest teilweise mit der Substratschicht A verbunden ist und die Photopolymerschicht B auf der anderen Seite zumindest teilweise mit der Schutzschicht C verbunden ist.

In einer Ausführungsform der Erfindung dient das erfindungsgemäße Verfahren zur Herstellung eines Schichtaufbaus wobei die Schutzschicht C auf einer Substratschicht D vorliegt, wobei die Schutzschicht C auf einer Seite zumindest teilweise mit der Substratschicht D verbunden ist und die Schutzschicht C auf der anderen Seite zumindest teilweise mit der Photopolymerschicht B verbunden ist.

In einer Ausführungsform der Erfindung dient das erfindungsgemäße Verfahren zur Herstellung eines Schichtaufbaus wobei die Photopolymerschicht B auf einer Substratschicht A vorliegt, wobei die Photopolymerschicht B auf einer Seite zumindest teilweise mit der Substratschicht A verbunden ist und die Photopolymerschicht B auf der anderen Seite zumindest teilweise mit der Schutzschicht C verbunden ist, und die Schutzschicht C liegt auf einer Substratschicht D vor, wobei die Schutzschicht C auf einer Seite zumindest teilweise mit der Substratschicht D verbunden ist und die Schutzschicht C auf der anderen Seite zumindest teilweise mit der Photopolymerschicht B verbunden ist. Die Schichten sind dabei in der Reihenfolge A-B-C-D angeordnet.

In einer Ausführungsform des erfindungsgemäßen Verfahrens besteht der erfindungsgemäße Schichtaufbau aus mindestens vier zumindest teilweise miteinander verbunden Schichten, wobei die Schichten in der Reihenfolge Substratschicht A, Photopolymerschicht B, Schutzschicht C und Substratschicht D unmittelbar aufeinander angeordnet sind.

In einer Ausführungsform des erfindungsgemäßen Verfahrens wird in einem ersten Schritt die Photopolymerschicht B auf einer Substratschicht A aufgetragen, um einen Schichtverbund A-B zu ergeben, in einem zweiten Schritt die Schutzschicht C auf einer Substratschicht D aufgetragen wird, um einen Schichtverbund C-D zu ergeben und in einem dritten Schritt der Schichtverbund A-B mit dem Schichtverbund C-D flächig verbunden um einen Schichtverbund A-B-C-D zu ergeben, wobei die Schichtverbund A-B mit dem Schichtverbund C-D vorzugsweise durch Laminierung verbunden wird.

In einer Ausführungsform des erfindungsgemäßen Verfahrens weist die Schutzschicht C eine Dicke von 1 bis 100 μm, bevorzugt von 2 bis 50 μm und ganz besonders bevorzugt von 3 bis 25 μm auf.

In einer Ausführungsform des erfindungsgemäßen Verfahrens enthält die Schutzschicht C einen UV-Absorber, vorzugsweise in einer Menge von 0.01 bis 10 Gew.-%, bevorzugter in einer Menge von 0.1 bis 5 Gew.-%, jeweils bezogen auf das Gesamtgewicht der Schutzschicht C.

In einer Ausführungsform des erfindungsgemäßen Verfahrens ist der Reaktivverdünner Pentaerythrit-triacrylat, eine Verbindung gemäß Formel (Ia), (Ib), (Ic), (II), (III), (VII) und/oder Mischungen davon ist, vorzugsweise eine Verbindung gemäß Formel (Ia) und/oder Mischungen davon, noch bevorzugter eine Verbindung gemäß Formel (Ia)

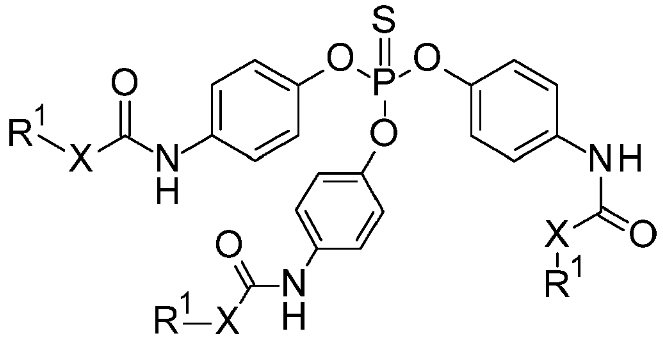

Formel (Ia),

wobei

- $R^1$ unabhängig voneinander jeweils eine strahlenhärtbare Gruppe und
- X unabhängig voneinander jeweils eine Einfachbindung zwischen $R^1$ und C=O oder ein linerer, verzweigter oder cyclischer gegebenenfalls heteroatomhaltiger und/oder gegebenenfalls durch funktionelle Gruppen substituierter Kohlenwasserstoffrest ist, und/oder Mischungen davon.

In einer Ausführungsform des erfindungsgemäßen Verfahrens enthält die Photopolymerschicht B Polyurethan-Matrixpolymere, Acrylat-Schreibmonomere und Photoinitiatoren, vorzugsweise sind die Matrixpolymere vernetzt, noch bevorzugter sind die Matrixpolymere dreidimensional vernetzt.

Ebenfalls Gegenstand der Erfindung ist ein Verfahren zur Herstellung eines Hologramms umfassend die folgenden Schritte:

a) Bereitstellen eines mehrschichtigen Aufzeichnungsmaterials enthaltend einen Schichtverbund A-B-C-D umfassend

I) eine Substratschicht A;
II) eine Photopolymerschicht B;
III) eine Schutzschicht C, umfassend

IIIa) mindestens ein thermoplastisches Harz ausgewählt aus der Gruppe bestehend aus Polyvinylbutyral mit $M_w \geq 100.000$ g/mol oder amorphem Polymethylmethacrylat mit $M_w \geq 100.000$ g/mol,
IIIb) mindestens einen Reaktivverdünner ausgewählt aus der Gruppe bestehend aus Pentaerythrit-triacrylat, Dipentaerythritpentaacrylat, Dipentaerythrithexaacrylat, Verbindung gemäß Formel (Ia)

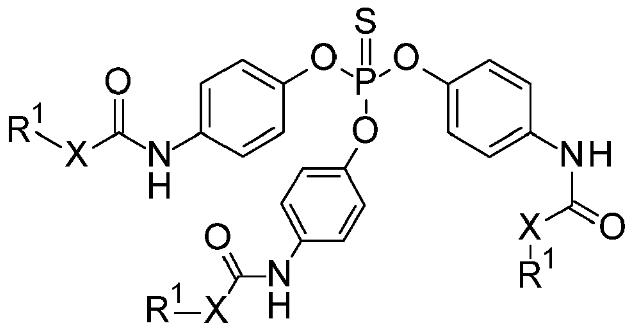

Formel (Ia),

Verbindung gemäß Formel (Ib)

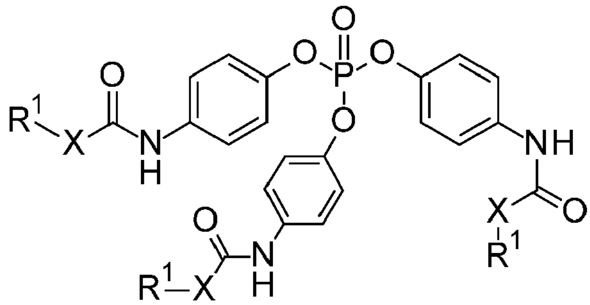

Formel (Ib),

Verbindung gemäß Formel (Ic)

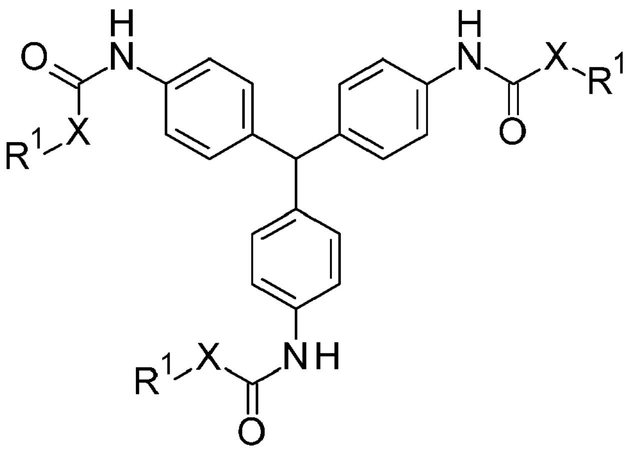

Formel (Ic),

wobei in den Formeln (Ia) bis (Ic)

$R^1$ unabhängig voneinander jeweils eine strahlenhärtbare Gruppe ist und
X unabhängig voneinander jeweils eine Einfachbindung zwischen $R^1$ und C=O oder ein linearer, verzweigter oder cyclischer gegebenenfalls heteroatomhaltiger und/oder gegebenenfalls durch funktionelle Gruppen substituierter Kohlenwasserstoffrest ist,

Verbindung gemäß Formel (II)

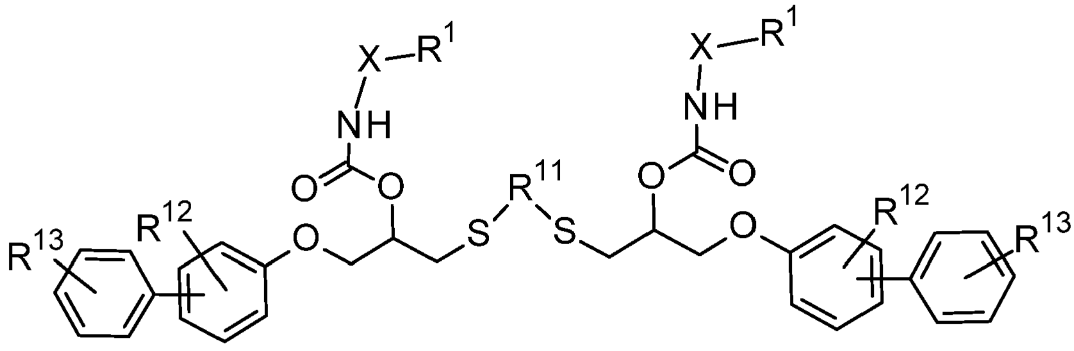

Formel (II),

wobei in der Formel (II)

$R^1$ und X wie in Formel (Ia) - (Ic) definiert ist,

$R^{11}$ ein linearer oder verzweigter, gegebenenfalls mit Heteroatomen substituierter aliphatischer, aromatischer oder araliphatischer Rest ist,

$R^{12}$ jeweils unabhängig voneinander bis zu vier Substituenten ausgewählt aus Methyl, Ethyl, Propyl, n-Butyl, tert.-Butyl, Chlor, Brom, Iod, Methylthio, Phenyl und / oder Phenylthio ist,

$R^{13}$ jeweils unabhängig voneinander bis zu fünf Substituenten ausgewählt aus Methyl, Ethyl, Propyl, n-Butyl, tert.-Butyl, Chlor, Brom, Iod, Methylthio, Phenyl und / oder Phenylthio ist,

Verbindung gemäß Formel (III)

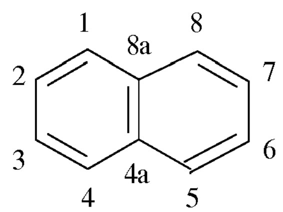

Formel (III),

i) die an wenigstens einem der Kohlenstoffatome 1, 2, 3, 4, 5, 6, 7, 8 mit einem Rest $R_{Acryl}$ der Formel (IV) substituiert ist,

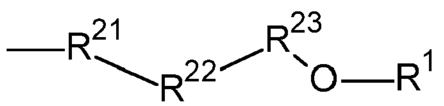

Formel (IV),

wobei in der Formel (IV)

$R^1$ wie in Formel (Ia) - (Ic) definiert ist,

$R^{21}$ Sauerstoff oder Schwefel ist,

$R^{22}$ eine Carbonamid (-C(O)N-) oder eine Carbonester (-C(O)O-) oder eine Sulfonamid ($-SO_2N-$) Gruppe ist,

$R^{23}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist, und

ii) die Verbindung der Formel (III) an wenigstens einem weiteren Kohlenstoffatom 1, 2, 3, 4, 5, 6, 7, 8 mit einem Rest der Formel (V) substituiert ist,

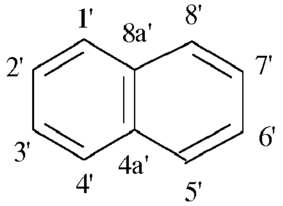

Formel (V),

wobei in der Formel (V)
die Kohlenstoffatome der Verbindung der Formel (V) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer beliebig substituierten Carbamoyl-Gruppe, die auch verbrückend an einen Rest der Formel (III) gebunden sein kann, oder einer Trifluormethyl-Gruppe oder einer Trifluormethoxy-Gruppe oder einem Rest $R_{Acryl'}$ der Formel (VI),

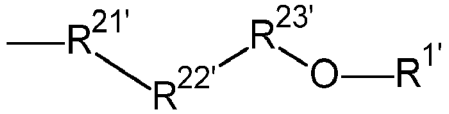

Formel (VI),

wobei in der Formel (VI)

| | |
|---|---|
| $R^{1'}$ wie $R^1$ | in Formel (IV) definiert ist, |
| $R^{21'}$ | Sauerstoff oder Schwefel ist, |
| $R^{22'}$ | eine Carbonamid (-C(O)N-) oder eine Carbonester (-C(O)O-) oder eine Sulfonamid ($-SO_2N-$) Gruppe ist, |
| $R^{23'}$ | ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist, |

iii) die übrigen Kohlenstoffatome der Verbindung der Formel (III) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer Trifluormethyl-Gruppe oder einer Trifluormethoxy-Gruppe substituiert sind, und Verbindung der Formel (VII)

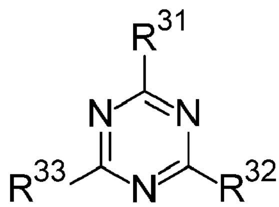

(VII),

wobei in der Formel (VII)

$R^{31}$, $R^{32}$, $R^{33}$ jeweils unabhängig voneinander OH, Halogen oder ein organischer Rest sind, wobei wenigstens einer der Reste ein eine strahlungshärtende Gruppe aufweisender organischer Rest ist; und

IIIc) mindestens einen Photoinitiator umfasst, und

IV) eine Substratschicht D,

wobei die Schichten in der Reihenfolge Substratschicht A, Photopolymerschicht B, Schutzschicht C und Substratschicht D unmittelbar aufeinander angeordnet sind;

b) Einbelichten eines Hologramms in die Photopolymerschicht B, sodass ein Schichtverbund A-B*-C-D entsteht, wobei B* eine Photopolymerschicht mit einem eingeschriebenen Hologramm ist;

c) Beaufschlagen des Schichtverbunds A-B*-C-D aus Schritt (b) mit aktinischer Strahlung, vorzugsweise UV-VIS-Strahlung, sodass ein Schichtverbund A-B'-C'-D entsteht, wobei B' die geblichene, durchpolymerisierte und nicht mehr photoempfindliche Photopolymerschicht B mit einem fixiertem Hologramm ist und C' die ausgehärtete Schutzschicht C ist; und

d) Delaminieren der Substratschicht D des Schichtverbunds A-B'-C'-D aus Schritt (c), sodass ein Schichtverbund A-B'-C' entsteht.

In einer Ausführungsform des erfindungsgemäßen Verfahrens weist die Schutzschicht C eine Dicke von 1 bis 100 μm, bevorzugt von 2 bis 50 μm und ganz besonders bevorzugt von 3 bis 25 μm auf.

In einer Ausführungsform des erfindungsgemäßen Verfahrens enthält die Schutzschicht C einen UV-Absorber, vorzugsweise in einer Menge von 0.01 bis 10 Gew.-%, bevorzugter in einer Menge von 0.1 bis 5 Gew.-%, jeweils bezogen auf das Gesamtgewicht der Schutzschicht C.

In einer Ausführungsform des erfindungsgemäßen Verfahrens ist der Reaktivverdünner Pentaerythrit-triacrylat, eine Verbindung gemäß Formel (Ia), (Ib), (Ic), (II), (III), (VII) und/oder Mischungen davon ist, vorzugsweise Pentaerythrit-triacrylat und eine Verbindung der Formel (Ia) und/oder Mischungen davon, noch bevorzugter eine Verbindung gemäß Formel (Ia)

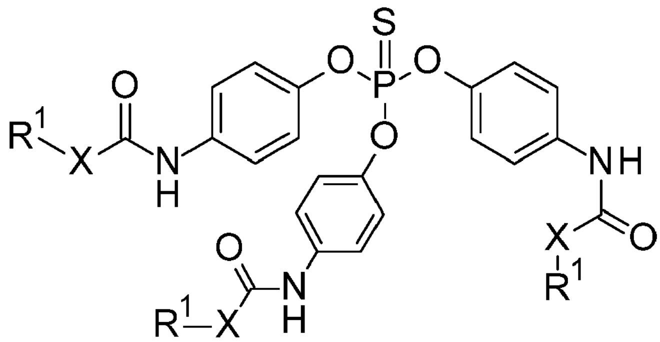

Formel (Ia),

wobei

- $R^1$ unabhängig voneinander jeweils eine strahlenhärtbare Gruppe und
- X unabhängig voneinander jeweils eine Einfachbindung zwischen $R^1$ und C=O oder ein linerer, verzweigter oder cyclischer gegebenenfalls heteroatomhaltiger und/oder gegebenenfalls durch funktionelle Gruppen substituierter Kohlenwasserstoffrest ist, und/oder Mischungen davon.

In einer Ausführungsform des erfindungsgemäßen Verfahrens enthält die Photopolymerschicht B Polyurethan-Matrixpolymere, Acrylat-Schreibmonomere und Photoinitiatoren, vorzugsweise sind die Matrixpolymere vernetzt, noch bevorzugter sind die Matrixpolymere dreidimensional vernetzt.

Gegenstand der Erfindung ist ebenfalls ein versiegeltes holographisches Medium umfassend einen Schichtaufbau A-B'-C' erhältlich aus dem erfindungsgemäßen Verfahren zur Herstellung eines Hologramms.

Der erfindungsgemäße Schichtaufbau A-B-C-D erfüllt den Zweck, ein holografisches Medium zu sein. In das holografische Medium kann wenigstens ein Hologramm einbelichtet werden.

Nach dem Einschreiben des Hologramms folgt der optische Fixierungsprozess bzw. das Beaufschlagen mit aktinischer Strahlung. Optisches Fixieren des Hologramms erfolgt vorzugsweise durch flächige breitbandige UV/VIS-Belichtung des ganzen Schichtaufbaus A-B*-C-D mit einer Lichtenergie-Dosis von 1-10 J/cm$^2$. Bei dem Fixieren werden Reste von Schreibmonomeren, die bei der lokalen Entstehung des Hologramms nicht involviert waren, in der ganzen Schicht B* durchpolymerisiert. Die als Sensibilisatoren dienenden Farbstoffe werden ebenfalls photochemisch zerstört. Die durch Farbstoffe verursachte starke technologische Verfärbung der Schicht B (und der nachfolgenden Schicht B*) verschwindet gänzlich. Die Schicht B* wird geblichen und verwandelt sich in eine nicht mehr photoaktive, farbstofffreie, stabile Schicht B' mit einem eingeschriebenen Hologramm. Schutzschicht C wird durch Polymerisation von Reaktivverdünner mit dem thermoplastischen Harz ausgehärtet wodurch die Schutzschicht C' gebildet wird. Die Schutzschicht C' haftet auf der holographischen Schicht (B') so gut, dass die Substratschicht (D) von dem A-B'-C'-Aufbau schadenlos

abgezogen werden kann.

Das Hologramm entsteht in der Schicht B bei direkter holografischen Belichtung des erfindungsgemäßen Folienaufbaus A-B-C-D. Die Schicht B verwandelt sich dadurch in Schicht B*. Der Schichtaufbau A-B*-C-D mit einem eingeschriebenen Hologramm in der Schicht B ist ein weiterer Gegenstand der Erfindung.

Die Qualität des Hologramms wird durch folgende Kriterien nach ISO-Norm 17901-1:2015(E) definiert. In einer vereinfachten Form versteht man das Hologramm als ein optisches Gitter, dessen Periode im Idealfall von Wellenlänge des Schreiblasers ($\lambda_w$) bestimmt ist. Als diffraktives Element reflektiert dieses Gitter das Licht mit der Wellenlänge ($\lambda_w$). Aufgrund der hohen Effizienz des Hologramms lässt sich diese Reflektion mit einem spektral in Transmission analysieren und erscheint im Spektrum als Peak (bei $\lambda_{peak}$) mit reduzierter Transmission. Diese Reduzierung der Transmission

$$T_{Red} = (100\% - T_{peak(A\text{-}B'\text{-}C')}\%) \quad (1)$$

dient als Maß für die Reflektionskraft (sichtbare "Stärke" oder "Qualität") des Hologramms.

Im Sinne der Erfindung ist die "Stärke" des Hologramms, die man im erfindungsgemäßen Aufbau A-B-C-D einschreiben kann, gar nicht oder nicht wesentlich schlechter, als dies im Aufbau A-B ohne jeglichen Schutzschichten der Fall ist. Diese Differenz $\Delta T$ lässt sich nach Formel (2) errechnen.:

$$\Delta T = (100\% - T_{peak(A\text{-}B'\text{-}C')}\%) - (100\% - T_{peak(A\text{-}B')}\%) \quad (2)$$

Es ist bevorzugt, dass diese Differenz $\Delta T < 20$ %, besonders bevorzugt < 15 % und insbesondere bevorzugt < 10 % ist.

Die spektrale Verschiebung des Transmissionsspektrums ist definiert als Differenz ($\Delta\lambda$) aus der Wellenlänge des einschreibenden Lasers ($\lambda_w$) und dem spektralen Peak des eingeschriebenen Hologramm($\lambda_{peak}$) (ISO-Norm 17901-1:2015(E)):

$$\Delta\lambda = \lambda_{peak} - \lambda_w \quad (3)$$

Vorzugsweise beträgt $\Delta\lambda$ des eingeschriebenen Hologramms im erfindungsgemäßen Schichtaufbau A-B'-C' +/- 10 nm, bevorzugter +/-5 nm, besonders bevorzugt +/-3 nm.

In einer Ausführungsform ist der erfindungsgemäße Schichtaufbau A-B'-C' dadurch gekennzeichnet, das die Substratschicht A eine der unten genannten Folien ist, die Schicht B' eine vernetzte geblichene stabile Kunststoffbeschichtung ist, die mindestens ein Hologramm beinhaltet die Schicht C' eine vernetzte stabile Kunststoffbeschichtung ist, die als äußere Schicht des holographischen Schichtaufbaus die Eigenschaften der Schutzschicht zeigt und zwar eine dauerhafte Beständigkeit gegen gängige organische Lösungsmittel, wässrigen Säuren und Laugen, Kosmetika, Haushalts- und Industriereinigungsmittel und eine ausreichende Kratzbeständigkeit gegen mechanische Einflüsse aufweist.

Substratschicht A

Die Substratschicht A ist vorzugsweise eine thermoplastische Substratschicht/Substratfolie oder ein anderer Träger wie z.B. Glas, Kunststoff, Metall oder Holz. Materialien oder Materialverbünde der thermoplastischen Substratschicht A basieren auf Polycarbonat (PC), Polyethylenterephthalat (PET), amorphe Polyester, Polybutylenterephthalat, Polyethylen, Polypropylen, Celluloseacetat, Cellulosehydrat, Cellulosenitrat, Cycloolefinpolymere, Polystyrol, hydriertem Polystyrol, Polyepoxide, Polysulfon, thermoplastisches Polyurethan (TPU), Cellulosetriacetat (CTA), Polyamid (PA), Polymethylmethacrylat (PMMA), Polyvinylchlorid, Polyvinylacetat, Polyvinylbutyral oder Polydicyclopentadien oder deren Mischungen. Besonders bevorzugt basieren sie auf PC, PET, PA, PMMA und CTA. Materialverbünde können Folienlaminate oder Coextrudate sein. Bevorzugte Materialverbünde sind Duplex- und Triplexfolien aufgebaut nach einem der Schemata A/B, A/B/A oder A/B/C. Besonders bevorzugt sind PC/PMMA, PC/PA, PC/PET, PET/PC/PET und PC/TPU. Vorzugsweise ist Substratschicht A im spektralen Bereich von 400-800 nm transparent.

Photopolymerschicht B

Die Photopolymerschicht B umfasst Matrixpolymere, Schreibmonomere und Photoinitiatoren. Als Matrixpolymere können amorphe Thermoplaste wie z.B. Polyacrylate, Polymethylmethacrylate oder Copolymere von Methylmethacrylat, Methacrylsäure oder andere Alkylacrylate und Alkylmethacrylate sowie Acrylsäure, wie z.B. Polybutylacrylat,weiterhin Polyvinylacetat und Polyvinylburyrat seine partiell hydrolysierten Derivate wie Polyvinylalkohole sowie Copolymerisate mit Ethylene und/oder weiteren (Meth)acrylaten, Gelatine, Celluloseester und Celluloseether wie Methylcellulose, Celluloseacetobutyrat, Silikone, wie z.B. Polydimethylsilicon, Polyurethane, Polybutadiene und Polyisoprene, sowie Polyethylenoxide,

Epoxyharze, insbesondere aliphatische Epoxyharze, Polyamide, Polycarbonate sowie die in US 4994347A und darin zitierten Systeme verwendet werden.

Besonders bevorzugt ist aber, wenn die Matrixpolymere Polyurethane sind.

Besonders bevorzugt ist auch, wenn die Matrixpolymere vernetzt sind. Insbesondere bevorzugt ist dabei, wenn die Matrixpolymere dreidimensional vernetzt sind.

Epoxyharze können kationisch mit sich selbst vernetzt werden. Weiterhin können auch Säureanhydride, Amine, Hydoxyalkylamide sowie Thiole als Vernetzer eingesetzt werden. Silicone können sowohl als Einkomponentensysteme durch Kondensation bei Anwesenheit von Wasser (und ggf. unter Broenstedtsäurenkatalyse) oder als zweikomponentige Systeme durch Zugabe von Kieselsäureester oder zinnorganische Verbindungen vernetzt werden. Ebenso ist die Hydrosilylierungen in Vinyl-Silansystemen möglich.

Ungesättigte Verbindungen, wie z.B. Acryloyl funktionelle Polymere oder ungesättigte Ester können mit Aminen oder Thiolen vernetzt werden. Eine kationische Vinyletherpolymerisation ist auch möglich.

Insbesondere bevorzugt ist aber, wenn die Matrixpolymere vernetzt, bevorzugt dreidimensional vernetzt und ganz besonders bevorzugt dreidimensional vernetzte Polyurethane sind.

Polyurethan-Matrixpolymere sind insbesondere durch Umsetzung wenigstens einer Polyisocyanat-Komponente a) mit wenigstens einer Isocyanat-reaktiven-Komponente b) erhältlich.

Die Polyisocyanat-Komponente a) umfasst wenigstens eine organische Verbindung mit wenigstens zwei NCO-Gruppen. Bei diesen organischen Verbindungen kann es sich insbesondere um monomere Di- und Triisocyanate, Polyisocyanate und / oder NCO-funktionelle Prepolymere handeln. Die Polyisocyanat-Komponente a) kann auch Mischungen monomerer Di- und Triisocyanate, Polyisocyanate und / oder NCO-funktioneller Prepolymere enthalten oder daraus bestehen.

Als monomere Di- und Triisocyanate können alle dem Fachmann an sich gut bekannten Verbindungen oder deren Mischungen eingesetzt werden. Diese Verbindungen können aromatische, araliphatische, aliphatische oder cycloaliphatische Strukturen aufweisen. In untergeordneten Mengen können die monomeren Di- und Triisocyanate auch Monoisocyanate, d.h. organische Verbindungen mit einer NCO-Gruppe umfassen.

Beispiele für geeignete monomere Di- und Triisocyanate sind 1,4-Butandiisocyanat, 1,5-Pentandiisocyanat, 1,6-Hexandiisocyanat (Hexamethylendiisocyanat, HDI), 2,2,4-Trimethylhexa-methylendiisocyanat und / oder 2,4,4-Trimethylhexamethylendiisocyanat (TMDI), Isophorondiiso-cyanat (IPDI), 1,8-Diisocyanato-4-(isocyanatomethyl)-octan, Bis-(4,4'-isocyanatocyclohexyl)-methan und / oder Bis-(2,4isocyanatocyclohexyl)methan und /oder deren Mischungen beliebigen Isomerengehalts, 1,4-Cyclohexandiisocyanat, die isomeren Bis-(isocyanatomethyl)cyclohexane, 2,4- und / oder 2,6-Diisocyanato-1-methylcyclohexan, (Hexahydro-2,4- und / oder 2,6-toluylendiisocyanat, H6-TDI), 1,4-Phenylendiisocyanat, 2,4- und / oder 2,6-Toluylendiisocyanat (TDI), 1,5-Naphthylendiisocyanat (NDI), 2,4'-und / oder 4,4'-Diphenylmethandiisocyanat (MDI), 1,3-Bis(iso-cyanatomethyl)benzol (XDI) und / oder das analoge 1,4-Isomere oder beliebige Mischungen der vorgenannten Verbindungen.

Geeignete Polyisocyanate sind Verbindungen mit Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen, die aus den vorgenannten Di- oder Triisocyanaten erhältlich sind.

Besonders bevorzugt handelt es sich bei den Polyisocyanaten um oligomerisierte aliphatische und / oder cycloaliphatische Di- oder Triisocyanate, wobei insbesondere die oben stehenden aliphatischen und / oder cycloaliphatischen Di- oder Triisocyanate verwendet werden können.

Ganz besonders bevorzugt sind Polyisocyanate mit Isocyanurat-, Uretdion- und / oder Iminooxadiazindion-Strukturen sowie Biurete basierend auf HDI oder deren Mischungen.

Geeignete Prepolymere enthalten Urethan- und / oder Harnstoff-Gruppen sowie gegebenenfalls weitere durch Modifizierung von NCO-Gruppen entstandene Strukturen wie oben genannt. Derartige Prepolymere sind beispielsweise durch Umsetzung der oben genannten monomeren Di- und Triisocyanate und/oder Polyisocyanaten a1) mit isocyanatreaktiven Verbindungen b1) erhältlich.

Als isocyanatreaktive Verbindungen b1) können Alkohole, Amino oder Mercapto-Verbindungen, bevorzugt Alkohole, verwendet werden. Dabei kann es sich insbesondere um Polyole handeln. Ganz besonders bevorzugt können als isocyanatreaktive Verbindung b1) Polyester-, Polyether-, Polycarbonat-, Poly(meth)acrylat- und/oder Polyurethan-Polyole verwendet werden.

Als Polyesterpolyole sind beispielsweise lineare Polyesterdiole oder verzweigte Polyesterpolyole geeignet, die in bekannter Weise durch Umsetzung von aliphatischen, cycloaliphatischen oder aromatischen Di- bzw. Polycarbonsäuren bzw. ihren Anhydriden mit mehrwertigen Alkoholen einer OH-Funktionalität $\geq 2$ erhalten werden können. Beispiele für geeignete Di- bzw. Polycarbonsäuren sind mehrwertige Carbonsäuren wie Bernstein-, Adipin-, Kork-, Sebacin-,

Decandicarbon-, Phthal-, Terephthal-, Isophthal- Tetrahydrophthal- oder Trimellithsäure sowie Säureanhydride wie Phthal-, Trimellith- oder Bernsteinsäureanhydrid oder deren beliebige Gemische untereinander. Die Polyesterpolyole können auch auf natürlichen Rohstoffen wie Rizinusöl basieren. Es ist ebenfalls möglich, dass die Polyesterpolyole auf Homo- oder Mischpolymerisaten von Lactonen basieren, die bevorzugt durch Anlagerung von Lactonen bzw. Lactongemischen wie Butyrolacton, ε-Caprolacton und / oder Methyl-ε-caprolacton an hydroxyfunktionelle Verbindungen wie mehrwertige Alkohole einer OH-Funktionalität ≥ 2 beispielsweise der nachstehend genannten Art erhalten werden können.

Beispiele für geeignete Alkohole sind alle mehrwertigen Alkohole wie z.B. die $C_2$ - $C_{12}$-Diole, die isomeren Cyclohexandiole, Glycerin oder deren beliebige Gemische untereinander.

Geeignete Polycarbonatpolyole sind in an sich bekannter Weise durch Umsetzung von organischen Carbonaten oder Phosgen mit Diolen oder Diol-Mischungen zugänglich.

Geeignete organische Carbonate sind Dimethyl-, Diethyl- und Diphenylcarbonat.

Geeignete Diole bzw. Mischungen umfassen die an sich im Rahmen der Polyestersegmente genannten mehrwertigen Alkohole einer OH-Funktionalität ≥ 2, bevorzugt Butandiol-1,4, Hexandiol-1,6 und / oder 3-Methylpentandiol. Auch Polyesterpolyole können zu Polycarbonatpolyolen umgearbeitet werden.

Geeignete Polyetherpolyole sind gegebenenfalls blockweise aufgebaute Polyadditionsprodukte cyclischer Ether an OH- oder NH-funktionelle Startermoleküle.

Geeignete cyclische Ether sind beispielsweise Styroloxide, Ethylenoxid, Propylenoxid, Tetrahydrofuran, Butylenoxid, Epichlorhydrin sowie ihre beliebigen Mischungen.

Als Starter können die an sich im Rahmen der Polyesterpolyole genannten mehrwertigen Alkohole einer OH-Funktionalität ≥ 2 sowie primäre oder sekundäre Amine und Aminoalkohole verwendet werden.

Bevorzugte Polyetherpolyole sind solche der vorgenannten Art ausschließlich basierend auf Propylenoxid oder statistische oder Block-Copolymere basierend auf Propylenoxid mit weiteren 1-Alkylenoxiden. Besonders bevorzugt sind Propylenoxid-homopolymere sowie statistische oder Block-Copolymere, die Oxyethylen-, Oxypropylen- und / oder Oxybutyleneinheiten aufweisen, wobei der Anteil der Oxypropyleneinheiten bezogen auf die Gesamtmenge aller Oxyethylen-, Oxypropylen- und Oxybutyleneinheiten mindestens 20 Gew.-%, bevorzugt mindestens 45 Gew.-% ausmacht. Oxypropylen- und Oxybutylen umfasst hierbei alle jeweiligen linearen und verzweigten $C_3$- und $C_4$-Isomere.

Daneben sind als Bestandteile der Polyol-Komponente b1) als polyfunktionelle, isocyanatreaktive Verbindungen auch niedermolekulare, d.h. mit Molekulargewichten ≤ 500 g/mol, kurzkettige, d.h. 2 bis 20 Kohlenstoffatome enthaltende aliphatische, araliphatische oder cycloaliphatische di-, tri- oder polyfunktionelle Alkohole geeignet.

Dies können beispielsweise in Ergänzung zu den oben genannten Verbindungen Neopentylglykol, 2-Ethyl-2-butylpropandiol, Trimethylpentandiol, stellungs-isomere Diethyloctandiole, Cyclohexandiol, 1,4-Cyclohexandimethanol, 1,6-Hexandiol, 1,2- und 1,4-Cyclohexandiol, hydriertes Bisphenol A, 2,2-Bis(4-hydroxy-cyclohexyl)-propan oder 2,2-Dimethyl-3-hydroxypropionsäure, 2,2-dimethyl-3-hydroxypropyl-ester sein. Beispiele geeigneter Triole sind Trimethylolethan, Trimethylolpropan oder Glycerin. Geeignete höherfunktionelle Alkohole sind Di-(trimethylolpropan), Pentaerythrit, Dipenta-erythrit oder Sorbit.

Besonders bevorzugt ist, wenn die Polyolkomponente ein difunktioneller Polyether-, Polyester oder ein Polyether-polyester-block-copolyester oder ein Polyether-Polyester-Blockcopolymer mit primären OH-Funktionen ist.

Es ist ebenfalls möglich, als isocyanatreaktive Verbindungen b1) Amine einzusetzen. Beispiele geeigneter Amine sind Ethylendiamin, Propylendiamin, Diaminocyclohexan, 4,4'-Dicylohexylmethandiamin, Isophorondiamin (IPDA), difunktionelle Polyamine wie z.B. die Jeffamine®, aminterminierte Polymere, insbesondere mit zahlenmittleren Molmassen ≤ 10000 g/Mol. Mischungen der vorgenannten Amine können ebenfalls verwendet werden.

Es ist ebenfalls möglich, als isocyanatreaktive Verbindungen b1) Aminoalkohole einzusetzen. Beispiele geeigneter Aminoalkohole sind die isomeren Aminoethanole, die isomere Aminopropanole die isomeren Aminobutanole und die isomeren Aminohexanole oder deren beliebige Mischungen.

Alle vorgenannten isocyanatreaktiven Verbindungen b1) können untereinander beliebig vermischt werden.

Bevorzugt ist auch, wenn die isocyanatreaktiven Verbindungen b1) eine zahlenmittlere Molmasse von ≥ 200 und ≤ 10000 g/Mol, weiter bevorzugt ≥ 500 und ≤ 8000 g/Mol und ganz besonders bevorzugt ≥ 800 und ≤ 5000 g/Mol aufweisen. Die OH-Funktionalität der Polyole beträgt bevorzugt 1.5 bis 6.0, besonders bevorzugt 1.8 bis 4.0.

Die Prepolymere der Polyisocyanat-Komponente a) können insbesondere einen Restgehalt an freiem monomeren Di- und Triisocyanate < 1 Gew.-%, besonders bevorzugt < 0.5 Gew.-% und ganz besonders bevorzugt < 0.3 Gew.-% aufweisen.

Es ist gegebenenfalls auch möglich, dass die Polyisocyanat-Komponente a) vollständig oder anteilsmäßig organische Verbindung enthält, deren NCO-Gruppen ganz oder teilweise mit aus der Beschichtungstechnologie bekannten Blockierungsmitteln umgesetzt sind. Beispiel für Blockierungsmittel sind Alkohole, Lactame, Oxime, Malonester, Pyrazole sowie Amine, wie z.B. Butanonoxim, Diisopropylamin, Malonsäurediethylester, Acetessigester, 3,5-Dimethylpyrazol, ε-Caprolactam, oder deren Mischungen.

Besonders bevorzugt ist, wenn die Polyisocyanat-Komponente a) Verbindungen mit aliphatisch gebundenen

NCO-Gruppen umfasst, wobei unter aliphatisch gebundenen NCO-Gruppen derartige Gruppen verstanden werden, die an ein primäres C-Atom gebunden sind. Die isocyanatreaktive Komponente b) umfasst bevorzugt wenigstens eine organische Verbindung, die im Mittel wenigstens 1.5 und bevorzugt 2 bis 3 isocyanatreaktive Gruppen aufweist. Im Rahmen der vorliegenden Erfindung werden als isocyanatreaktive Gruppen bevorzugt Hydroxy-, Amino- oder MercaptoGruppen angesehen.

Die isocyanatreaktive Komponente kann insbesondere Verbindungen umfassen, die im Zahlenmittel wenigstens 1.5 und bevorzugt 2 bis 3 isocyanatreaktive Gruppen aufweisen.

Geeignete polyfunktionelle, isocyanatreaktive Verbindungen der Komponente b) sind beispielsweise die oben beschriebenen Verbindungen b1).

Erfindungsgemäß geeignete Photoinitiatoren sind üblicherweise durch aktinische Strahlung aktivierbare Verbindungen, die eine Polymerisation der Schreibmonomere auslösen können. Bei den Photoinitiatoren kann zwischen unimolekularen (Typ I) und bimolekularen (Typ II) Initiatoren unterschieden werden. Des Weiteren werden sie je nach ihrer chemischen Natur in Photoinitiatoren für radikalische, anionische, kationische oder gemischte Art der Polymerisation unterschieden.

Typ I-Photoinitiatoren (Norrish-Typ-I) für die radikalische Photopolymerisation bilden beim Bestrahlen durch eine unimolekulare Bindungsspaltung freie Radikale. Beispiele für Typ I-Photo-initiatoren sind Triazine, Oxime, Benzoinether, Benzilketale, Bis-imidazole, Aroylphosphinoxide, Sulfonium- und Iodoniumsalze.

Typ II-Photoinitiatoren (Norrish-Typ-II) für die radikalische Polymerisation bestehen aus einem Farbstoff als Sensibilisator und einem Coinitiator und durchlaufen bei der Bestrahlung mit auf den Farbstoff angepasstem Licht eine bimolekulare Reaktion. Zunächst absorbiert der Farbstoff ein Photon und überträgt aus einem angeregten Zustand Energie auf den Coinitiator. Dieser setzt durch Elektronen- oder Protonentransfer oder direkte Wasserstoffabstraktion die polymerisationsauslösenden Radikale frei.

Im Sinne dieser Erfindung werden bevorzugt Typ II-Photoinitiatoren verwendet.

Farbstoff und Coinitiator der Typ II-Photoinitiatoren können entweder unmittelbar gemeinsam mit den weiteren Komponenten des Photopolymers vermischt werden oder aber auch jeweils mit Einzelkomponenten vorvermischt werden. Insbesondere wenn das Photopolymer Polyurethan-Matrixpolymere enthalten soll, kann der Farbstoff mit der Isocyanat-reaktiven Komponente und der Coinitiator mit der Isocyanat-Komponente vorvermischt werden. Ebenso ist es aber auch möglich den Coinitiator mit der Isocyanat-reaktiven Komponente und den Farbstoff mit der Isocyanat-Komponente vorzuvermischen.

Solche Photoinitiatorsysteme sind prinzipiell in der EP 0 223 587 A beschriebenen und bestehen bevorzugt aus einer Mischung von einem oder mehreren Farbstoffen mit Ammoniumalkylarylborat(en).

Geeignete Farbstoffe, die zusammen mit einem Ammoniumalkylarylborat einen Typ II-Photoinitiator bilden, sind die in der WO 2012062655 beschriebenen kationischen Farbstoffe in Kombination mit den eben dort beschriebenen Anionen.

Geeignete Ammoniumalkylarylborate sind beispielsweise (Cunningham et al., RadTech'98 North America UV/EB Conference Proceedings, Chicago, Apr. 19-22, 1998): Tetrabutylammonium Triphenylhexylborat, Tetrabutylammonium Triphenylbutylborat, Tetrabutylammonium Trinapthylhexylborat, Tetrabutylammonium Tris(4-tert.butyl)-phenylbutylborat, Tetrabutylammonium Tris-(3-fluorphenyl)-hexylborat hexylborat ([191726-69-9], CGI 7460, Produkt der BASF SE, Basel, Schweiz), 1-Methyl-3-octylimidazolium Dipentyldiphenylborat und Tetrabutylammonium Tris-(3-chlor-4-methylphenyl)-hexylborat ([1147315-11-4], CGI 909, Produkt der BASF SE, Basel, Schweiz).

Es kann vorteilhaft sein, Gemische dieser Photoinitiatoren einzusetzen. Je nach verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Ganz besonders bevorzugt ist, wenn der Photoinitiator eine Kombination von Farbstoffen, deren Absorptionsspektren zumindest teilweise den Spektralbereich von 400 bis 800 nm abdecken, mit wenigstens einem auf die Farbstoffe abgestimmten Coinitiator umfasst.

Bevorzugt ist auch, wenn wenigstens ein für eine Laserlichtfarbe ausgewählt aus blau, grün und rot geeigneter Photoinitiator in der Photopolymer-Formulierung enthalten ist.

Weiter bevorzugt ist auch, wenn die Photopolymer-Formulierung für wenigstens zwei Laserlichtfarben ausgewählt aus blau, grün und rot je einen geeigneten Photoinitiator enthält.

Ganz besonders bevorzugt ist schließlich, wenn die Photopolymer-Formulierung für jede der Laserlichtfarben blau, grün und rot jeweils einen geeigneten Photoinitiator enthält.

Bei einer weiteren bevorzugten Ausführungsform ist vorgesehen, dass die Schreibmonomere ein mono- und / oder ein multifunktionelles (Meth)acrylat-Schreibmonomere umfassen. Ganz besonders bevorzugt können die Schreibmonomere zusätzlich wenigstens ein mono- und / oder ein multifunktionelles Urethan(meth)acrylat umfassen.

Geeignete Acrylat-Schreibmonomere sind insbesondere Verbindungen der allgemeinen Formel (VIII)

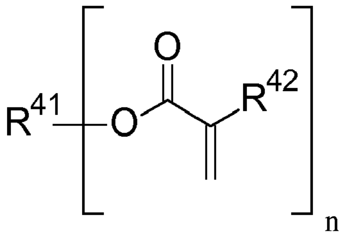

(VIII)

bei denen n≥1 und n≤4 ist und $R^{41}$ ein linearer, verzweigter, cyclischer oder heterocyclischer unsubstituierter oder gegebenenfalls auch mit Heteroatomen substituierter organischer Rest und/oder $R^{42}$ Wasserstoff, ein linearer, verzweigter, cyclischer oder heterocyclischer unsubstituierter oder gegebenenfalls auch mit Heteroatomen substituierter organischer Rest ist. Besonders bevorzugt ist $R^{42}$ Wasserstoff oder Methyl und/oder $R^{41}$ ein linearer, verzweigter, cyclischer oder heterocyclischer unsubstituierter oder gegebenenfalls auch mit Heteroatomen substituierter organischer Rest.

Als Acrylate bzw. Methacrylate werden vorliegend Ester der Acrylsäure bzw. Methacrylsäure bezeichnet. Beispiele bevorzugt verwendbarer Acrylate und Methacrylate sind Phenylacrylat, Phenylmethacrylat, Phenoxyethylacrylat, Phenoxyethylmethacrylat, Phenoxyethoxyethylacrylat, Phenoxyethoxyethylmethacrylat, Phenylthioethylacrylat, Phenylthioethylmethacrylat, 2-Naphthylacrylat, 2-Naphthylmethacrylat, 1,4-Bis-(2-thionaphthyl)-2-butylacrylat, 1,4-Bis-(2-thionaphthyl)-2-butylmethacrylat, Bisphenol A Diacrylat, Bisphenol A Dimethacrylat, sowie deren ethoxylierte Analogverbindungen, N-Carbazolylacrylate.

Als Urethanacrylate werden vorliegend Verbindungen mit mindestens einer Acrylsäureestergruppe und mindestens eine Urethanbindung verstanden. Solche Verbindungen können beispielsweise durch Umsetzung eines Hydroxy-funktionellen Acrylats oder Methacrylats mit einer Isocyanat-funktionellen Verbindung erhalten werden.

Beispiele hierfür verwendbarer Isocyanat-funktionelle Verbindungen sind Monoisocyanate sowie die unter a) genannten monomeren Diisocyanate, Triisocyanate und / oder Polyisocyanate. Beispiele geeigneter Monoisocyanate sind Phenylisocyanat, die isomeren Methylthiophenylisocyanate. Di-, Tri- oder Polyisocyanate sind oben genannt sowie Triphenylmethan-4,4',4''-triisocyanat und Tris-(p-isocyanatophenyl)thiophosphat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind dabei aromatische Di-, Tri- oder Polyisocyanate.

Als hydroxyfunktionelle Acrylate oder Methacrylate für die Herstellung von Urethanacrylaten kommen beispielsweise Verbindungen wie 2-Hydroxyethyl(meth)acrylat, Polyethylenoxid-mono-(meth)acrylate, Polypropylenoxidmono(meth)acrylate, Polyalkylenoxidmono(meth)-acrylate, Poly-(ε-caprolacton)mono(meth)acrylate, wie z.B. Tone® M100 (Dow, Schwalbach, DE), 2-Hydroxy-propyl(meth)acrylat, 4-Hydroxybutyl(meth)acrylat, 3-Hydroxy-2,2-dimethylpropyl-(meth)acrylat, Hydroxypropyl(meth)acrylat, Acrylsäure-(2-hydroxy-3-phenoxypropylester), die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Bevorzugt sind 2-Hydroxyethylacrylat, Hydroxypropylacrylat, 4-Hydroxybutylacrylat und Poly(ε-caprolacton)mono-(meth)acrylat.

Ebenfalls verwendet werden können die an sich bekannten hydroxylgruppenhaltigen Epoxy(meth)-acrylate mit OH-Gehalten von 20 bis 300 mg KOH/g oder hydroxylgruppenhaltige Polyurethan-(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten.

Bevorzugt sind insbesondere Urethanacrylate erhältlich aus der Umsetzung von Tris(p-isocyanatophenyl)thiophosphat und / oder m-Methylthiophenylisocyanat mit alkoholfunktionellen Acrylaten wie Hydroxyethyl(meth)acrylat, Hydroxypropyl(meth)acrylat und / oder Hydroxybutyl(meth)-acrylat.

Ebenso ist es möglich, dass das Schreibmonomer weitere ungesättigte Verbindungen wie α,β-ungesättigte Carbonsäurederivate wie beispielsweise Maleinate, Fumarate, Maleimide, Acrylamide, weiterhin Vinylether, Propenylether, Allylether und Dicyclopentadienyl-Einheiten enthaltende Verbindungen sowie olefinisch ungesättigte Verbindungen wie z.B. Styrol, α-Methylstyrol, Vinyltolu-ol und / oder Olefine, umfasst.

Gemäß einer weiteren bevorzugten Ausführungsform ist vorgesehen, dass die Photopolymer-Formulierung zusätzlich monomere Urethane als Additive enthält, wobei die Urethane insbesondere mit wenigstens einem Fluoratom substituiert sein können.

Bevorzugt können die Urethane die allgemeine Formel (IX)

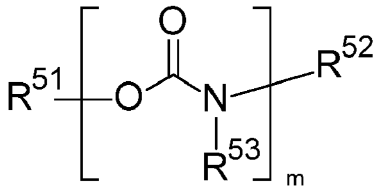

(IX)

haben, in der m≥1 und m≤8 ist und $R^{51}$, $R^{52}$ und $R^{53}$ lineare, verzweigte, cyclische oder heterocyclische unsubstituierte oder gegebenenfalls auch mit Heteroatomen substituierte organische Reste und/oder $R^{52}$, $R^{53}$ unabhängig voneinander Wasserstoff sind, wobei bevorzugt mindestens einer der Reste $R^{51}$, $R^{52}$, $R^{53}$ mit wenigstens einem Fluoratom substituiert ist und besonders bevorzugt $R^{51}$ ein organischer Rest mit mindestens einem Fluoratom ist. Besonders bevorzugt ist $R^{52}$ ein linearer, verzweigter, cyclischer oder heterocyclischer unsubstituierter oder gegebenenfalls auch mit Heteroatomen wie beispielsweise Fluor substituierter organischer Rest.

Gemäß einer weiteren bevorzugten Ausführungsform der Erfindung ist vorgesehen, dass das Photopolymer 10 bis 89.999 Gew.-%, bevorzugt 20 bis 70 Gew.-% Matrixpolymere, 3 bis 60 Gew.-%, bevorzugt 10 bis 50 Gew.-% Schreibmonomere, 0.001 bis 5 Gew.-%, bevorzugt 0.5 bis 3 Gew.-% Photoinitiatoren und gegebenenfalls 0 bis 4 Gew.-%, bevorzugt 0 bis 2 Gew.-% Katalysatoren, 0 bis 5 Gew.-% , bevorzugt 0.001 bis 1 Gew.-% Stabilisatoren, 0 bis 40 Gew.-%, bevorzugt 10 bis 30 Gew.-% monomere Fluorurethane und 0 bis 5 Gew.-%, bevorzugt 0.1 bis 5 Gew.-% weitere Additive enthält, wobei die Summe aller Bestandteile 100 Gew.-% beträgt.

Besonders bevorzugt werden Photopolymer mit 20 bis 70 Gew.-% Matrixpolymeren, 20 bis 50 Gew.-% Schreibmonomere, 0.001 bis 5 Gew.-% Photoinitiatoren, 0 bis 2 Gew.-% Katalysatoren, 0.001 bis 1 Gew.-% Radikalstabilisatoren gegebenenfalls 10 bis 30 Gew.-% Fluorurethane und gegebenenfalls 0.1 bis 5 Gew.-% weiterer Additive eingesetzt.

Als Katalysatoren können Urethanisierungskatalysatoren, wie z.B. organische oder anorganischen Derivate des Bimuths, des Zinns, des Zinks oder des Eisens (siehe dazu auch die in der US 2012/062658 genannten Verbindungen) verwendet werden. Besonders bevorzugte Katalysatoren sind Butylzinn-tris(2-ethylhexanoat), Eisen(III) - trisacetylacetonat, Bismuth(III)tris(2-ethylhexa-noat), und Zinn(II) bis(2-ethylhexanoat). Weiterhin können auch sterisch gehinderte Amine als Katalysatoren eingesetzt werden.

Als Stabilisatoren können Radikalinhibitoren wie HALS-Amine, N-Alkyl-HALS, N-Alkoxy-HALS- und N-Alkoxyethyl-HALS-Verbindungen sowie Antioxidantien und / oder UV Absorber zum Einsatz kommen.

Als weitere Additive können Verlaufshilfsmittel und / oder Antistatika und / oder Thixotropiermittel und / oder Verdicker und / oder Biozide eingesetzt werden.

Schutzschicht C

Die latente Schutzschicht C umfasst vor der Härtung mit aktinischer Strahlung ein physikalisch trocknendes polymeres Harz, einen acrylfunktionellen Reaktivverdünner und einen Photoinitiator. Bevorzugt weist die latente Schutzschicht C zusätzlich einen UV Absorber in einer Menge von 0.01 bis 10 Gew. %, bevorzugter in einer Menge von 0.1 bis 5 Gew.-%, jeweils bezogen auf das Gesamtgewicht der Schutzschicht C.

Vorzugsweise weist die Schutzschicht C ein Dicke von 1 bis 100 μm, bevorzugt von 2 bis 50 μm und ganz besonders bevorzugt von 3 bis 25 μm auf.

Die physikalisch trocknenden Harze sind ausgewählt aus der Gruppe bestehend aus Polyvinylbutyral mit $M_w \geq 100.000$ g/mol oder amorphem Polymethylmethacrylat mit $M_w \geq 100.000$ g/mol und weisen bevorzugt einen Glasübergang zwischen -20° und 190°C auf. Sie können in geeigneten Lösemitteln gelöst werden. Das amorphe Polymethylmethacrylat mit $M_w \geq 100.000$ g/mol ist z.B. Degalan M345, Degalan M920, Degacryl M547, Degacryl M727, Degacryl MW730 oder Degacryl 6962 F, von Evonik Industries AG, Marl, Deutschland. Ein Polyvinylbutyral mit $M_w \geq 100.000$ g/mol ist z.B. Mowital B75H von Kuraray Europe GmbH, Hattersheim, Deutschland.

Der Reaktivverdünner enthält oder besteht vorzugsweise aus einer oder mehreren strahlungshärtenden Verbindungen mit mindestens zwei vorzugsweise mindestens drei strahlungshärtenden, radikalisch polymerisierbaren Gruppen pro Molekül, wobei es sich bevorzugt um Acryl und / oder Methacrylgruppen und ganz besonders bevorzugt um Acrylgruppen handelt.

Weiterhin können auch die oben genannten Acrylsäureester als analoge Methacrylsäureester verwendet werden. Ebenfalls sind Mischungen der genannten Acrylate miteinander und der analogen Methacrylate untereinander und Mischungen von Acrylaten und Methacrylaten möglich.

In einer Ausführungsform ist der mindestens einen Reaktivverdünner ausgewählt aus der Gruppe bestehend aus Pentaerythrit-triacrylat, Dipentaerythritpentaacrylat, Dipentaerythrithexaacrylat, Verbindung gemäß Formel (Ia)

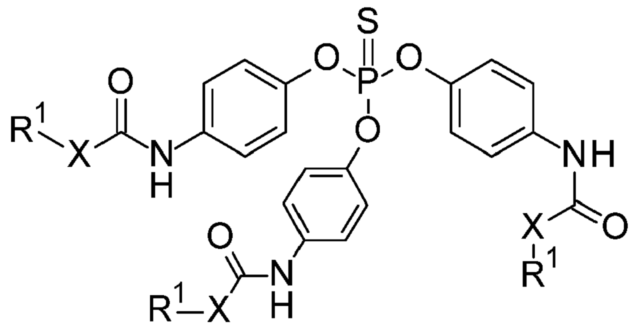

Formel (Ia),

Verbindung gemäß Formel (Ib)

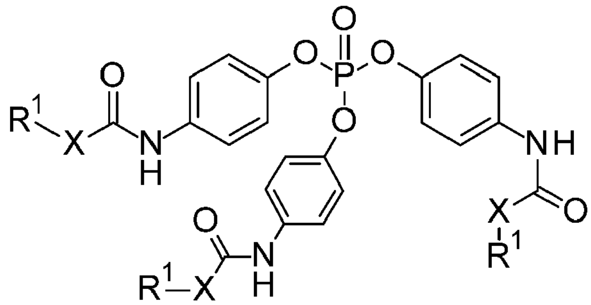

Formel (Ib),

Verbindung gemäß Formel (Ic)

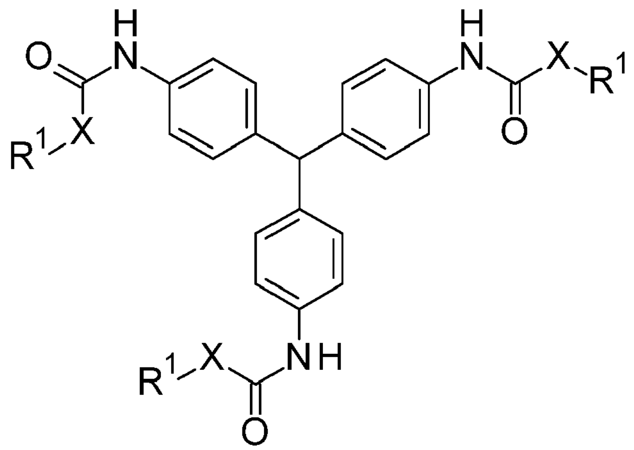

Formel (Ic),

wobei in den Formeln (Ia) bis (Ic)

- $R^1$ unabhängig voneinander jeweils eine strahlenhärtbare Gruppe ist und
- X unabhängig voneinander jeweils eine Einfachbindung zwischen $R^1$ und C=O oder ein linearer, verzweigter oder cyclischer gegebenenfalls heteroatomhaltiger und/oder gegebenenfalls durch funktionelle Gruppen substituierter Kohlenwasserstoffrest ist,

Verbindung gemäß Formel (II)

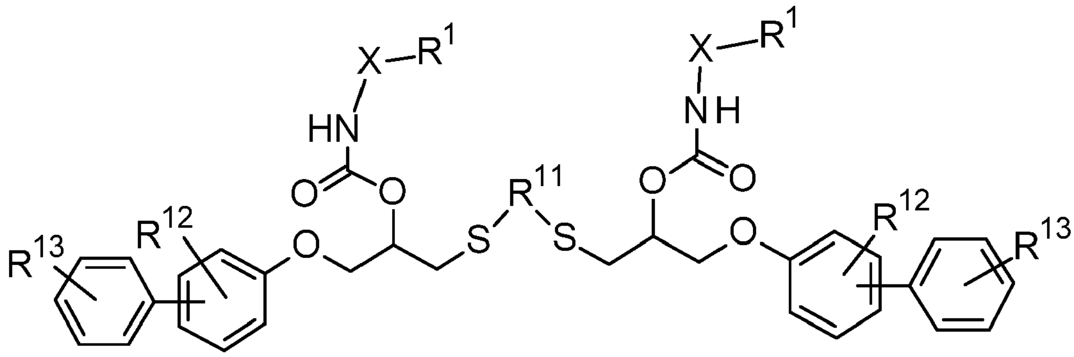

Formel (II),

wobei in der Formel (II)

$R^1$ und X wie in Formel (Ia) - (Ic) definiert ist,
$R^{11}$ ein linearer oder verzweigter, gegebenenfalls mit Heteroatomen substituierter aliphatischer, aromatischer oder araliphatischer Rest ist,
$R^{12}$ jeweils unabhängig voneinander bis zu vier Substituenten ausgewählt aus Methyl, Ethyl, Propyl, n-Butyl, tert.-Butyl, Chlor, Brom, Iod, Methylthio, Phenyl und / oder Phenylthio ist,
$R^{13}$ jeweils unabhängig voneinander bis zu fünf Substituenten ausgewählt aus Methyl, Ethyl, Propyl, n-Butyl, tert.-Butyl, Chlor, Brom, Iod, Methylthio, Phenyl und / oder Phenylthio ist

Verbindung gemäß Formel (III)

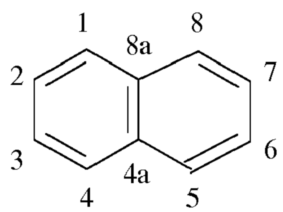

Formel (III),

i) die an wenigstens einem der Kohlenstoffatome 1, 2, 3, 4, 5, 6, 7, 8 mit einem Rest $R_{Acryl}$ der Formel (IV) substituiert ist,

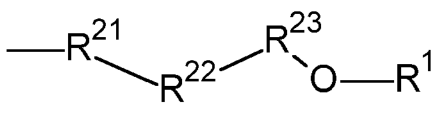

Formel (IV),

wobei in der Formel (IV)

$R^1$ wie in Formel (Ia) - (Ic) definiert ist,
$R^{21}$ Sauerstoff oder Schwefel ist,
$R^{22}$ eine Carbonamid (-C(O)N-) oder eine Carbonester (-C(O)O-) oder eine Sulfonamid ($-SO_2N-$) Gruppe ist,
$R^{23}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist,

und
ii) die Verbindung der Formel (III) an wenigstens einem weiteren Kohlenstoffatom 1, 2, 3, 4, 5, 6, 7, 8 mit einem Rest der Formel (V) substituiert ist,

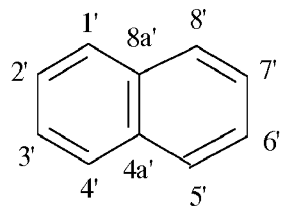

Formel (V),

wobei in der Formel (V)
die Kohlenstoffatome der Verbindung der Formel (V) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer beliebig substituierten Carbamoyl-Gruppe, die auch verbrückend an einen Rest der Formel (III) gebunden sein kann, oder einer Trifluormethyl-Gruppe oder einer Trifluormethoxy-Gruppe oder einem Rest $R_{Acryl'}$ der Formel (VI),

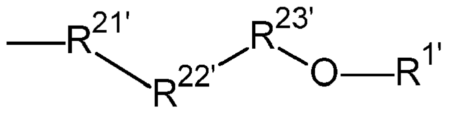

Formel (VI),

wobei in der Formel (VI)

$R^{1'}$ wie $R^1$ in Formel (IV) definiert ist,
$R^{21'}$ Sauerstoff oder Schwefel ist,
$R^{22'}$ eine Carbonamid (-C(O)N-) oder eine Carbonester (-C(O)O-) oder eine Sulfonamid ($-SO_2N-$) Gruppe ist,
$R^{23'}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist,

iii) die übrigen Kohlenstoffatome der Verbindung der Formel (III) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer Trifluormethyl-Gruppe oder einer Trifluormethoxy-Gruppe substituiert sind, und

Verbindung der Formel (VII)

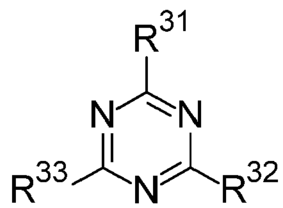

(VII),

wobei in der Formel (VII)
$R^{31}$, $R^{32}$, $R^{33}$ jeweils unabhängig voneinander OH, Halogen oder ein organischer Rest sind, wobei wenigstens einer der Reste ein eine strahlungshärtende Gruppe aufweisender organischer Rest ist.

Bevorzugt ist der mindestens eine Reaktivverdünner ausgewählt aus der Gruppe bestehend aus Pentaerythrittriacrylat, Dipentaerythritpentaacrylat, Dipentaerythrithexaacrylat, Verbindung gemäß Formel (Ia)

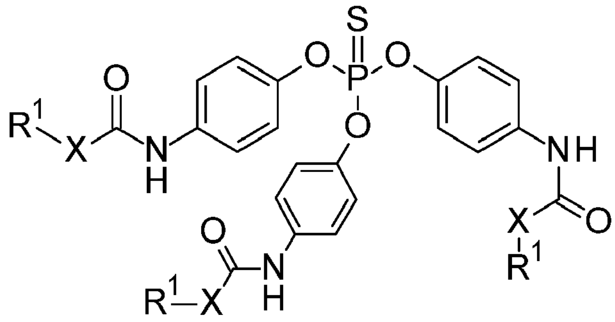

Formel (Ia),

Verbindung gemäß Formel (Ib)

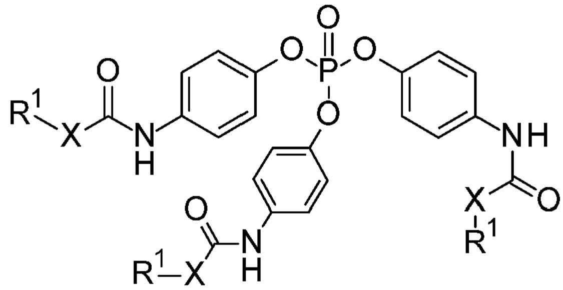

Formel (Ib),

Verbindung gemäß Formel (Ic)

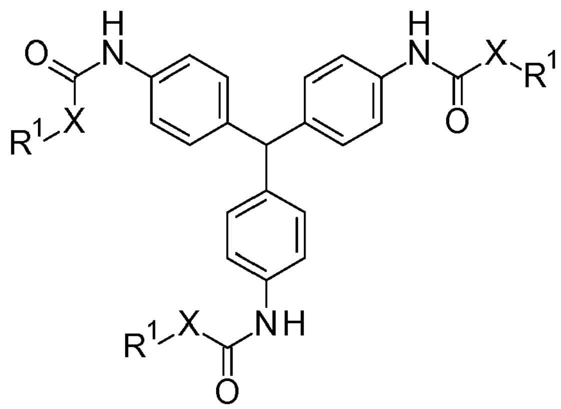

Formel (Ic),

wobei in den Formeln (Ia) bis (Ic)

- $R^1$ unabhängig voneinander jeweils eine strahlenhärtbare Gruppe und
- X unabhängig voneinander jeweils eine Einfachbindung zwischen $R^1$ und C=O oder ein linearer, verzweigter oder cyclischer gegebenenfalls heteroatomhaltiger und/oder gegebenenfalls durch funktionelle Gruppen substituierter Kohlenwasserstoffrest ist, vorzugsweise unabhängig voneinander jeweils ein linearer, verzweigter oder cyclischer gegebenenfalls heteroatomhaltiger und/oder gegebenenfalls durch funktionelle Gruppen substituierter Kohlenwasserstoffrest ist

Besonders bevorzugt ist der mindestens eine Reaktivverdünner Pentaerythrit-triacrylat, eine Verbindung gemäß Formel (Ia) und/oder Mischungen davon, noch bevorzugter eine Verbindung gemäß Formel (Ia).

Bevorzugt ist R1 in Formel (Ia)-(Ic) eine Vinylether-, Acrylat- oder Methacrylat-Gruppe, besonders bevorzugt eine Acrylatgruppe.

Grundsätzlich können einzelne oder mehrere der kohlenstoffgebundenen Wasserstoffatome der Gruppe R1

auch durch C1- bis C5-Alkylgruppen ersetzt sein, was allerdings nicht bevorzugt ist.

Bevorzugt weist die Gruppe X in Formel (Ia)-(Ic) 2 bis 40 Kohlenstoffatome sowie ein oder mehrere in Form von Etherbrücken vorliegende Sauerstoffatome auf. X kann dabei sowohl linear als auch verzweigt oder cyclisch sowie durch funktionelle Gruppen substituiert sein. Besonders bevorzugt ist die Gruppe X jeweils eine lineare oder verzweigte Oxyalkylen- oder Polyoxyalkylengruppe.

Bevorzugte Polyoxyalkylengruppen weisen bis zu 10, bevorzugt bis zu 8, Wiederholungseinheiten der jeweiligen Oxyalkylengruppe auf.

Grundsätzlich ist es möglich, dass X in Formel (Ia)-(Ic) gleiche oder verschiedene Oxyalkylengruppen als Wiederholungseinheiten aufweist, wobei eine solche Wiederholungseinheit bevorzugt 2 bis 6, besonders bevorzugt 2 bis 4 Kohlenstoffatome aufweist. Besonders bevorzugte Oxyalkyleneinheiten sind Oxyethylen sowie jeweils die isomeren Oxypropylene oder Oxybutylene.

Die Wiederholungseinheiten innerhalb der jeweiligen Gruppe X können dabei ganz oder teilweise blockweise oder statistisch verteilt vorliegen.

In einer bevorzugten Ausführungsform der Erfindung ist X unabhängig voneinander jeweils eine Oxyalkyleneinheit ausgewählt aus der Gruppe bestehend aus $-CH_2-CH_2-O-$, $-CH_2-CHCH_3-O-$, $-CHCH_3-CH_2-O-$, $-(CH_2-CH_2-O)_n-$, $-O(CH_2-CHCH_3-O)_n-$ wobei n eine ganze Zahl von 2 bis 7 ist, und $-O-CH_2-CH_2-(O-(CH_2)_5-CO)_m-$, wobei m eine ganze Zahl von 1 bis 5 ist.

Die Verbindungen gemäß Formel (Ia)-(Ic) können dargestellt werden, wie in WO2015091427A1 offenbart.

In einer weiteren Ausführungsform ist der Reaktivverdünner eine Verbindung gemäß Formel (II)

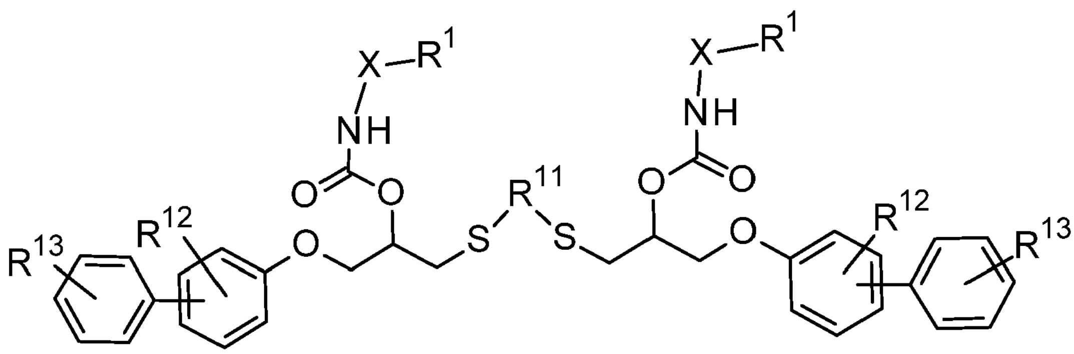

Formel (II),

wobei in der Formel (II)

$R^1$ und X wie in Formel (Ia) - (Ic) definiert ist,

$R^{11}$ ein linearer oder verzweigter, gegebenenfalls mit Heteroatomen substituierter aliphatischer, aromatischer oder araliphatischer Rest ist,

$R^{12}$ jeweils unabhängig voneinander bis zu vier Substituenten ausgewählt aus Methyl, Ethyl, Propyl, n-Butyl, tert.-Butyl, Chlor, Brom, Iod, Methylthio, Phenyl und / oder Phenylthio ist,

$R^{13}$ jeweils unabhängig voneinander bis zu fünf Substituenten ausgewählt aus Methyl, Ethyl, Propyl, n-Butyl, tert.-Butyl, Chlor, Brom, Iod, Methylthio, Phenyl und / oder Phenylthio ist.

Die Verbindungen gemäß Formel (II) können dargestellt werden, wie in WO2012/020061 A1 offenbart.

Gemäß einer ersten bevorzugten Ausführungsform ist vorgesehen, dass $R^{11}$ in Formel (II) ein linear oder verzweigte aliphatischer, aromatischer oder araliphatischer Rest mit 2 bis 22 KohlenstoffAtomen ist, der bevorzugt mit einem oder mehreren Sauerstoff-, Stickstoff- und/oder Schwefel-Atomen substituiert ist. Weiter bevorzugt ist, wenn $R^{11}$ 2 bis 16 Kohlenstoff-, 0 bis 4 Sauerstoff-, 0 bis 1 Stickstoff- und 0 bis 1 Schwefel-Atome aufweist. Möglich ist auch, dass $R^{11}$ in Formel (II) wenigstens eine funktionelle Gruppe ausgewählt aus der Gruppe Ether (-O-), Thioether (-S-), Ester (-O-CO), Urethan (NH-CO) umfasst. Es kann sich bei $R^{11}$ in diesem Fall also insbesondere um lineare oder verzweigte, gegebenenfalls mit Heteroatomen substituierte aliphatische, aromatische oder araliphatische Ether, Thioether, Ester oder Urethane handeln, wobei diese Verbindungen wiederum bevorzugt aliphatischer Natur sein können.

Ganz besonders bevorzugt ist, wenn $R^{11}$ in Formel (II) $(CH_2)_1$ mit 1=2 bis 10, $(CH_2CH_2-O)_m-CH_2-CH_2$ mit m = 1 oder 2, $CH(CH_3)-CH(CH_3)$, $CH_2-CO-OCH_2-CH_2-O-CO-CH_2$, Phenylen-S-Phenylen und/oder $CH_2-CH(CH_2-O-CO-NH-Phenylen-S-Phenyl)$ ist.

Bevorzugt sind auch Verbindungen der Formel (II), bei denen die strahlenhärtende Gruppe Acrylat ist.

Die Substituenten $R^{12}$ und $R^{13}$ in Formel (II) können jeweils unabhängig voneinander H, Methyl, Phenyl, Methylthio oder Phenylthio und bevorzugt Wasserstoff sein.

In einer weiteren Ausführungsform ist der Reaktivverdünner eine Verbindung gemäß Formel (III)

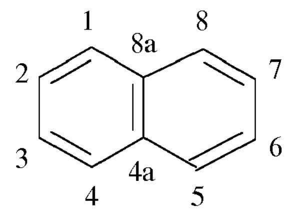

Formel (III),

i) die an wenigstens einem der Kohlenstoffatome 1, 2, 3, 4, 5, 6, 7, 8 mit einem Rest $R_{Acryl}$ der Formel (IV) substituiert ist,

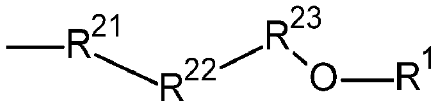

Formel (IV),

wobei in der Formel (IV)

$R^1$ wie in Formel (Ia) - (Ic) definiert ist,
$R^{21}$ Sauerstoff oder Schwefel ist,
$R^{22}$ eine Carbonamid (-C(O)N-) oder eine Carbonester (-C(O)O-) oder eine Sulfonamid ($-SO_2N-$) Gruppe ist,
$R^{23}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist, und

ii) die Verbindung der Formel (III) an wenigstens einem weiteren Kohlenstoffatom 1, 2, 3, 4, 5, 6, 7, 8 mit einem Rest der Formel (V) substituiert ist,

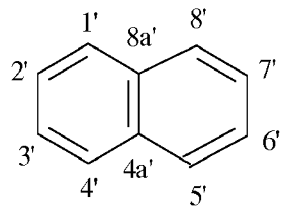

Formel (V),

wobei in der Formel (V)
die Kohlenstoffatome der Verbindung der Formel (V) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer beliebig substituierten Carbamoyl-Gruppe, die auch verbrückend an einen Rest der Formel (III) gebunden sein kann, oder einer Trifluormethyl-Gruppe oder einer Trifluormethoxy-Gruppe oder einem Rest $R_{Acryl'}$ der Formel (VI),

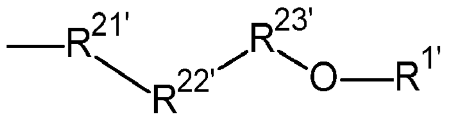

Formel (VI),

wobei in der Formel (VI)

$R^{1'}$ wie $R^1$ in Formel (IV) definiert ist,

$R^{21'}$ Sauerstoff oder Schwefel ist,
$R^{22'}$ eine Carbonamid (-C(O)N-) oder eine Carbonester (-C(O)O-) oder eine Sulfonamid (-$SO_2$N-) Gruppe ist,
$R^{23'}$ ein gesättigter oder ungesättigter oder linearer oder verzweigter gegebenenfalls substituierter 2-10 C-Atome aufweisender Rest oder ein bis zu fünf (-$CH_2$-$CH_2$-O-)- oder (-C($CH_3$)H-$CH_2$-O-)-Gruppen aufweisender Polyether oder ein bis zu fünf Stickstoff-Atome aufweisendes Polyamin ist,

iii) die übrigen Kohlenstoffatome der Verbindung der Formel (III) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer Trifluormethyl-Gruppe oder einer Trifluormethoxy-Gruppe substituiert sind

Die Verbindungen gemäß Formel (III) können dargestellt werden wie in WO2016/091965 A1 offenbart.
Vorzugsweise sind die Verbindungen gemäß Formel (III) an dem Kohlenstoffatom der Position 5 in der Formel (III) mit dem Rest der Formel (V) substituiert, wobei der Rest der Formel (V) bevorzugt über das Kohlenstoffatom der Position 8' an das Kohlenstoffatom der Position 5 gebunden sein kann.
Ebenfalls bevorzugt ist, wenn die Verbindung an dem Kohlenstoffatom der Position 6 in der Formel (III) mit dem Rest $R_{Acryl}$ der Formel (IV) substituiert ist.
Vorteilhaft ist auch, wenn der Rest der Formel (V) an dem Kohlenstoffatom der Position 7' mit dem Rest $R_{Acryl'}$ der Formel (VI) substituiert ist.
Vorzugsweise steht in dem Rest $R_{Acryl}$ $R^{22}$ für Carbonamid und / oder in dem Rest $R_{Acryl'}$ $R^{22'}$ für Carbonamid.
Weiterhin vorteilhaft ist auch, wenn in dem Rest $R_{Acryl}$ $R^1$ für Acrylate oder Methacrylate und / oder in dem Rest $R_{Acryl'}$ $R^1$ für Acrylate oder Methacrylate steht.
Darüber hinaus kann vorzugsweise in dem Rest $R_{Acryl}$ $R^{23}$ ein -$CH_2$-$CH_2$-Rest und / oder in dem der Rest $R_{Acryl'}$ $R^{23'}$ ein -$CH_2$-$CH_2$-Rest sein.
Bevorzugt ist auch, wenn $R^{21}$ und / oder $R^{21'}$ Sauerstoff ist.
Ganz besonders bevorzugt ist, wenn $R^{21}$ und / oder $R^{21'}$ Sauerstoff ist und $R^{22}$ und / oder $R^{22'}$ eine Carbonamid-Gruppe ist.
Insbesondere bevorzugt ist die erfindungsgemäße Verbindung der Formel (III) aus der Gruppe der folgenden Substanzen ausgewählt: 2-[({[2'-({[2-(Acryloyloxy)ethyl]carbamoyl}oxy)-1,1'-bi-naphthyl-2-yl]oxy}carbonyl)amino]ethyl methacrylat, Dimethyl 2,2'-bis({[2-(methacryl-oyloxy)ethyl]carbamoyl}oxy)-1,1'-binaphthyl-3,3'-dicarboxylat, Diethyl 2,2'-bis({[2-(meth-acryloyloxy)ethyl]carbamoyl}oxy)-1,1'-binaphthyl-3,3'-dicarboxylat, 1,1'-Binaphthyl-2,2'-diylbis(oxycarbonyliminoethan-2,1-diyl)bisacrylat, 1,1'-Binaphthyl-2,2'-diylbis(oxycarbonylimino-ethan-2,1-diyl)bis(2-methylacrylat), (6,6'-Dicyano-1,1'-binaphthyl-2,2'-diyl)bis(oxycarbonylimino-ethan-2,1-diyl) bisacrylat, (6,6'-Difluoro-1,1'-binaphthyl-2,2'-diyl)bis(oxycarbonyliminoethan-2,1-diyl) bisacrylat, (6,6'-Dichloro-1,1'-binaphthyl-2,2'-diyl)bis(oxycarbonyliminoethan-2,1-diyl) bisacrylat, (6,6'-Dibromo-1,1'-binaphthyl-2,2'-diyl)bis(oxycarbonyliminoethan-2,1-diyl) bisacrylat, (6,6'-Diiodo-1,1'-binaphthyl-2,2'-diyl)bis(oxycarbonyliminoethan-2,1-diyl) bisacrylat, Difluoro-1,1'-binaphthyl-2,2'-diyl)bis(oxycarbonyliminoethan-2,1-diyl) bis(2-methylacrylat), (6,6'-Dichloro-1,1'-binaphthyl-2,2'-diyl)bis(oxycarbonyliminoethan-2,1-diyl) bis(2-methylacrylat), (6,6'-Dibromo-1,1'-binaphthyl-2,2'-diyl)bis(oxycarbonyliminoethan-2,1-diyl) bis(2-methylacrylat), (6,6'-Diiodo-1,1'-binaphthyl-2,2'-diyl)bis(oxycarbonyliminoethan-2,1-diyl) bis(2-methylacrylat), (7,7'-Di-methoxy-1,1'-binaphthyl-2,2'-diyl)bis(oxycarbonyliminoethan-2,1-diyl) bisacrylat, (7,7'-Diethoxy-1,1'-binaphthyl-2,2'-diyl)bis(oxycarbonyliminoethan-2,1-diyl) bisacrylat, 2-{[({2'-[(Hexyl-carbamoyl)oxy]-1,1'-binaphthyl-2-yl}oxy)carbonyl]amino}ethyl acrylat, 2-{[({2'-[(Butylcarba-moyl)oxy]-1,1'-binaphthyl-2-yl}oxy)carbonyl]amino}ethyl acrylat, 2-{[({2'-[(Hexylcarba-moyl)oxy]-1,1'-binaphthyl-2-yl}oxy)carbonyl]amino}ethyl 2-methylacrylat, 2-{[({2'-[(Butylcarba-moyl)oxy]-1,1'-binaphthyl-2-yl}oxy)carbonyl]amino}ethyl 2-methylacrylat, 2-{[({2'-[(Hexylcarba-moyl)oxy]-1,1'-binaphthyl-2-yl}oxy)carbonyl]amino}ethyl acrylat, 2-{[({2'-[(Hexylcarbamoyl)-oxy]-1,1'-binaphthyl-2-yl}oxy)carbonyl]amino}ethyl 2-methylacrylat, 2-{[({2'-[(Hexylcarba-moyl)oxy]-1,1'-binaphthyl-2-yl}oxy)carbonyl]amino}ethyl acrylat, 2-{[({2'-[(Hexylcarbamoyl)-oxy]-1,1'-binaphthyl-2-yl}oxy)carbonyl]amino}ethyl 2-methylacrylat, 2-{[({2'-[(Butylcarbamoyl)-oxy]-1,1'-binaphthyl-2-yl}oxy)carbonyl]amino}ethyl acrylat, 2-{[({2'-[(Butylcarbamoyl)oxy]-1,1'-binaphthyl-2-yl}oxy)carbonyl]amino}ethyl 2-methylacrylat, 2-[({[2'-({[3-(Methylsulfanyl)-phenyl]carbamoyl}oxy)-1,1'-binaphthyl-2-yl]oxy}carbonyl)amino]ethyl acrylat, 2-[({[2'-({[3-(Methylsulfanyl)phenyl]carbamoyl}oxy)-1,1'-binaphthyl-2-yl]oxy}carbonyl)amino]ethyl methacrylat, 2-[({[2'-({[2-(Methylsulfanyl)phenyl]carbamoyl}oxy)-1,1'-binaphthyl-2-yl]oxy}carbonyl)-amino]ethyl acrylat, 2-[({[2'-({[2-(Methylsulfanyl)phenyl]carbamoyl}oxy)-1,1'-binaphthyl-2-yl]-oxy}carbonyl)amino]ethyl methacrylat, 2-[({[2'-({[4-(Methylsulfanyl)phenyl]carbamoyl}oxy)-1,1'-binaphthyl-2-yl]oxy}carbonyl)amino]ethyl acrylat, 2-[({[2'-({[4-(Methylsulfanyl)phenyl]carba-moyl}oxy)-1,1'-binaphthyl-2-yl]oxy}carbonyl)amino]ethyl methacrylat, 2-{[({2'-[(1-Naphthyl-carbamoyl)oxy]-1,1'-binaphthyl-2-yl}oxy)carbonyl]amino}ethyl acrylat, 2-{[({2'-[(1-Naphthyl-carbamoyl)oxy]-1,1'-binaphthyl-2-yl}oxy)carbonyl]amino}ethyl methacrylat, Hexan-1,6-diylbis-(carbamoyloxy-1,1'-binaphthyle-2',2-diyloxycarbonyliminoethan-2,1-diyl) bisacrylat, Hexan-1,6-diylbis(carbamoyloxy-1,1'-binaphthyle-2',2-diyloxycarbonyliminoethan-2,1-diyl) bis(2-methylacrylat), (2,2,4-Trimethylhexane-1,6-diyl)bis(carbamoyloxy-1,1'-binaphthyl-2',2-diyloxycarbonyl-iminoethane-2,1-diyl)-bisacrylat, (2,2,4-Trimethylhexane-1,6-diyl)bis(carbamoyloxy-1,1'-bi-naphthyl-2',2-diyloxycarbonyliminoethane-2,1-diyl)-bis(2-methylacrylat), 2-({[(2'-{[(3-{[({[2'-({[2-(Acryloyloxy)ethyl]carbamoyl}oxy)-1,1'-bi-naphthyl-2-yl]oxy}carbonyl)amino]methyl}-3,5,5-trimethylcyclohexyl)carbamoyl]-oxy}-1,1'-binaphthyl-2-yl)oxy]carbonyl}amino)ethyl acrylat, 2-({[(2'-{[(3-{[({[2'-({[2-(Methacryloyloxy)ethyl]carbamoyl}oxy)-1,1'-binaphthyl-2-yl]-oxy}carbonyl)amino]methyl}-3,5,5-trimethylcyclohexyl)-'carbamoyl]oxy}-1,1'-binaphthyl-2-yl)-oxy]carbonyl}amino)ethyl methacrylat), (6-Fluor-1,1'-binaphthyl-2,2'-diyl)bis(oxycarbonyl-iminoethan-2,1-diyl) bisacrylat, (6-Fluor-1,1'-binaphthyl-2,2'-diyl)bis(oxycarbonyliminoethan-2,1-diyl) bis (2-methylacrylat), (6-Chlor-1,1'-binaphthyl-2,2'-diyl)bis(oxycarbonyliminoethan-2,1-diyl) bisacrylat, (6-Chlor-1,1'-binaphthyl-2,2'-diyl)bis(oxycarbonyliminoethan-2,1-diyl) bis (2-methylacrylat), (6-Brom-1,1'-binaphthyl-2,2'-diyl)bis(oxycarbonyliminoethan-2,1-diyl) bisacrylat, (6-Brom-1,1'-binaphthyl-2,2'-diyl)bis(oxycarbonyliminoethan-2,1-diyl) bis (2-methylacrylat), (6-Iod-1,1'-binaphthyl-2,2'-diyl)bis(oxycarbonyliminoethan-2,1-diyl) bisacrylat, (6-Iod-1,1'-binaphthyl-2,2'-diyl)bis(oxycarbonyliminoethan-2,1-diyl) bis (2-methylacrylat), (6-Cyan-1,1'-binaphthyl-2,2'-diyl)bis(oxycarbonyliminoethan-2,1-diyl) bisacrylat, (6-Cyan-1,1'-binaphthyl-2,2'-diyl)bis(oxycar-bonyliminoethan-2,1-diyl) bis(2-methylacrylat), (6-Fluor-6'-cyan-1,1'-binaphthyl-2,2'-diyl)bis(oxy-carbonyliminoethan-2,1-diyl) bisacrylat, (6-Fluor-6'-cyan-1,1'-binaphthyl-2,2'-diyl)bis(oxy-carbonyliminoethan-2,1-diyl) bis(2-methylacrylat), (6-Chlor-6'-cyan-1,1'-binaphthyl-2,2'-diyl)-bis(oxycarbonyliminoethan-2,1-diyl) bisacrylat, (6-Chlor-6'-cyan-1,1'-binaphthyl-2,2'-diyl)bis(oxy-carbonyliminoethan-2,1-diyl) bis(2-methylacrylat), (6-Brom-6'-cyan-1,1'-binaphthyl-2,2'-diyl)bis-(oxycarbonyliminoethan-2,1-diyl) bisacrylat, (6-Brom-6'-cyan-1,1'-binaphthyl-2,2'-diyl)bis(oxy-carbonyliminoethan-2,1-diyl) bis(2-methylacrylat), (6-Iod-6'-cyan-1,1'-binaphthyl-2,2'-diyl)bis-(oxycarbonyliminoethan-2,1-diyl) bisacrylat, (6-Iod-6'-cyan-1,1'-binaphthyl-2,2'-diyl)bis(oxy-carbonyliminoethan-2,1-diyl) bis(2-methylacrylat).

In einer weiteren Ausführungsform ist der Reaktivverdünner eine Verbindung gemäß Formel (VII)

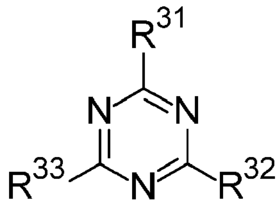

(VII),

wobei in der Formel (VII)

R31, R32, R33 jeweils unabhängig voneinander OH, Halogen oder ein organischer Rest sind, wobei wenigstens einer der Reste ein eine strahlungshärtende Gruppe aufweisender organischer Rest ist.

Die Verbindungen der Formel (VII) können beispielsweise durch Umsetzung der entsprechenden Amine oder Alkohole mit Cyanurchlorid erhalten werden. Bei dieser Reaktion handelt es sich um eine Aminierung bzw. Veretherung. Die Reaktion kann unter Zuhilfenahme bekannten Katalysatoren wie z.B. tertiärer Amine, Aniline oder stickstoffhaltiger Heterocyclen oder anorganischer Basen durchgeführt werden.

Die Herstellung derartiger Verbindungen ist beispielsweise in SU 2006990 (1976) und JP 58004027 beschrieben.

Vorzugsweise sind der oder die organischen Reste der Verbindung gemäß Formel (VII) über ein Sauerstoff- oder ein Stickstoffatom am Triazinring gebunden.

Bevorzugt ist weiterhin, wenn die strahlungshärtende Gruppe eine Acrylat- oder eine Methacrylat-Gruppe ist.

Bevorzugt sind $R^{31}$, $R^{32}$, $R^{33}$ in Formel (VII) unabhängig voneinander Halogen, substituierte oder unsubstituierte Phenol-, Naphtol-, Anilin-, Naphtalin-, 2-Hydroxyethyl(meth)acrylat-, Hydroxypropyl(meth)acrylat- und / oder 4-Hydroxybutyl(meth)acrylat-Reste, wobei wenigstens einer der Reste $R^{31}$, $R^{32}$, $R^{33}$ ein 2-Hydroxyethyl(meth)acrylat-, ein Hydroxypropyl(meth)acrylat- oder ein 4-Hydroxybutyl(meth)acrylat-Rest ist.

Weiter bevorzugt ist, wenn wenigstens zwei der Reste $R^{31}$, $R^{32}$, $R^{33}$ in Formel (VII) jeweils unabhängig voneinander ein 2-Hydroxyethyl(meth)acrylat-, ein Hydroxypropyl(meth)acrylat- und /oder ein 4-Hydroxybutyl(meth)acrylat-Rest sind.

Die eingesetzten Photoinitiatoren sind üblicherweise durch aktinische Strahlung aktivierbare Verbindungen, die eine Polymerisation der entsprechender Gruppen auslösen können.

Bei den Photoinitiatoren kann zwischen unimolekularen (Typ I) und bimolekularen (Typ II) Initiatoren unterschieden die eine radikalische Polymerisation auslösen, hier zu existiert ein breiter Stand der Technik.

Typ I-Photoinitiatoren (Norrish-Typ-I) für die radikalische Photopolymerisation bilden beim Bestrahlen durch eine unimolekulare Bindungsspaltung freie Radikale.

Beispiele für Typ I-Photoinitiatoren sind Triazine, wie z. B. Tris(trichlormethyl)triazin, Oxime, Benzoinether, Benzilketale, alpha-alpha-Dialkoxyacetophenon, Phenylglyoxylsäureester, Bis-imidazole, Aroylphosphinoxide, z.B. 2,4,6-Trimethyl-benzoyldiphenylphosphinoxid, Sulfonium-und Iodoniumsalze.

Typ II-Photoinitiatoren (Norrish-Typ-II) für die radikalische Polymerisation durchlaufen bei der Bestrahlung eine bimolekulare Reaktion, wobei der Photoinitiator im angeregten Zustand mit einem zweiten Molekül, dem Coinitiator, reagiert und durch Elektronen- oder Protonentransfer oder direkte Wasserstoffabstraktion die polymerisationsauslösenden Radikale bildet.

Beispiele für Typ-II-Photoinitiatoren sind Chinone, wie z. B. Campherchinon, aromatische Ketoverbindungen, wie z. B. Benzophenone in Kombination mit tertiären Aminen, Alkylbenzophenone, halogenierte Benzophenone, 4,4'-Bis(dimethylamino)benzophenon (Michlers Keton), Anthron, Methyl-p-(dimethylamino)benzoat, Thioxanthon, Ketocoumarine, alpha-Aminoalkylphenon, alpha-Hydroxyalkylphenon und kationische Farbstoffe, wie z. B. Methylenblau, in Kombination mit tertiären Aminen.

Für den UV- und kurzwelligen sichtbaren Bereich werden Typ-I- und Typ-II Photoinitiatoren eingesetzt, für den längerwelligen sichtbaren Lichtbereich kommen überwiegend Typ-II- Photoinitiatoren zum Einsatz.

Bevorzugt werden 1-hydroxy-cyclohexyl-phenyl-keton (z.B. Irgacure® 184 der BASF SE), 2-hydroxy-2-methyl-1-phenyl-1-propanon (z.B. Irgacure® 1173 der BASF SE), 2-hydroxy-1-{4-[4-(2-hydroxy-2-methyl-propionyl)-benzyl]-phenyl}-2-methylpropan-1-on (z.B. Irgacure® 127 der BASF SE), 2-hydroxy-1-[4-(2-hydroxyethoxy)phenyl]-2-methyl-1-propanon (z.B. Irgacure® 2959 der BASF SE); 2,4,6-trimethylbenzoyl-diphenylphosphine oxide (z.B. Lucirin® TPO der BASF SE); 2,4,6-trimethylbenzoyl-diphenyl phosphinat (z.B. Lucirin® TPO-L der BASF SE), bis(2,4,6-trimethylbenzoyl)-phenylphosphineoxid (Lucirin® 819); [1-(4-phenylsulfanylbenzoyl)heptyl-ideneamino]benzoat (z.B. Irgacure® OXE 01 der BASF SE); [1-[9-ethyl-6-(2-methyl-benzoyl)carbazol-3-yl]ethylideneamino] acetat (z.B. Irgacure® OXE 02 der BASF SE) sowie deren Mischungen. Besonders bevorzugt sind 2-hydroxy-2-methyl-1-phenyl-1-propanon und 2,4,6-trimethylbenzoyl-diphenylphosphin oxid sowie deren Mischungen.

Typische UV Absorber sind Benzotriazole, Cyanoacrylate, Benzophenone, Phenyltriazine, Hydroxyphenyltrazine oder Oxalanilide.

Weiterhin können Lichtschutzmittel wie Phenole oder HALS Amine enthalten sein.

In einer bevorzugten Ausführungsform umfasst die Schutzschicht C

I) mindestens ein thermoplastisches Harz ausgewählt aus der Gruppe bestehend aus Polyvinylbutyral mit $M_w \geq$ 100.000 g/mol oder amorphem Polymethylmethacrylat mit $M_w \geq$ 100.000 g/mol;

II) mindestens einen Reaktivverdünner ausgewählt aus der Gruppe bestehend aus Pentaerythrit-triacrylat, Verbindung gemäß Formel (Ia)

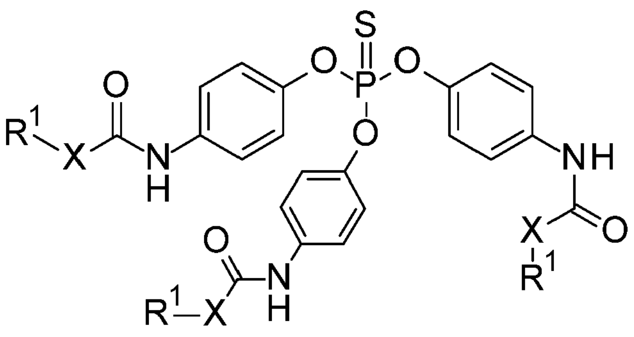

Formel (Ia),

Verbindung gemäß Formel (Ib)

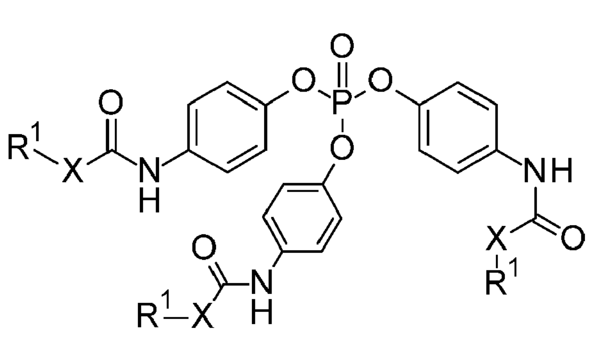

Formel (Ib),

Verbindung gemäß Formel (Ic)

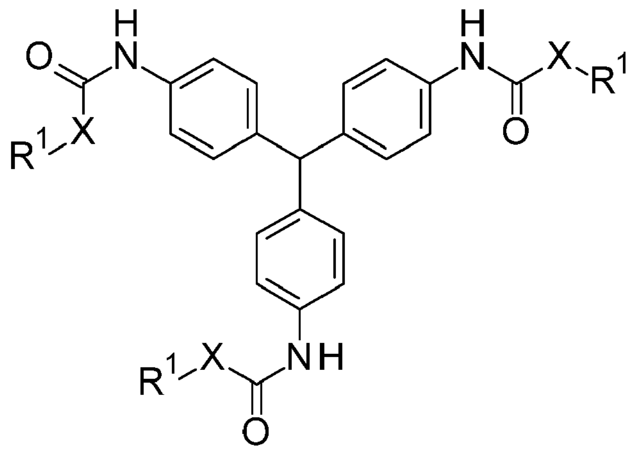

Formel (Ic),

wobei in den Formeln (Ia) bis (Ic)

$R^1$ unabhängig voneinander jeweils eine strahlenhärtbare Gruppe und
X unabhängig voneinander jeweils eine Einfachbindung zwischen $R^1$ und C=O oder ein linearer, verzweigter oder cyclischer gegebenenfalls heteroatomhaltiger und/oder gegebenenfalls durch funktionelle Gruppen substituierter Kohlenwasserstoffrest ist, und/oder Mischungen davon;

III) mindestens einen Photoinitiator.

In einer anderen bevorzugten Ausführungsform umfasst die Schutzschicht C

I) mindestens ein thermoplastisches Harz ausgewählt aus der Gruppe bestehend aus Polyvinylbutyral mit $M_w \geq$ 100.000 g/mol oder amorphem Polymethylmethacrylat mit $M_w \geq$ 100.000 g/mol;
II) mindestens einen Reaktivverdünner ausgewählt aus der Gruppe bestehend aus Pentaerythrit-triacrylat, Verbindung gemäß Formel (Ia)

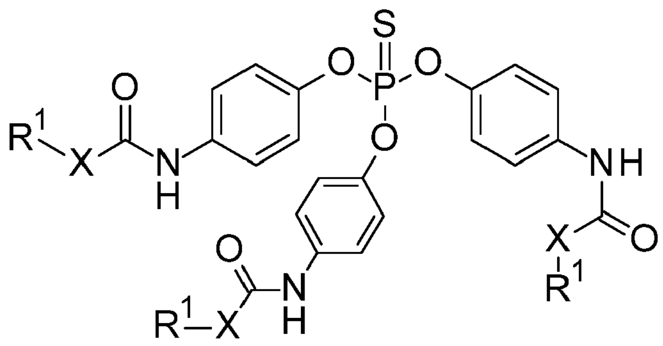

Formel (Ia),

wobei

$R^1$ unabhängig voneinander jeweils eine strahlenhärtbare Gruppe und
X unabhängig voneinander jeweils eine Einfachbindung zwischen $R^1$ und C=O oder ein linearer, verzweigter oder cyclischer gegebenenfalls heteroatomhaltiger und/oder gegebenenfalls durch funktionelle Gruppen substituierter Kohlenwasserstoffrest ist, und/oder Mischungen davon;

III) mindestens einen Photoinitiator.

Substratschicht D

Die Substratschicht D ist vorzugsweise eine thermoplastische Substratschicht/Substratfolie. Materialien oder

Materialverbünde der thermoplastischen Substratschicht D basieren auf Polycarbonat(PC), Polyethylenterephthalat (PET), amorphen Polyester, Polybutylenterephthalat, Polyethylen, Polypropylen, Celluloseacetat, Cellulosehydrat, Cellulosenitrat, Cycloolefinpolymere, Polystyrol, hydriertem Polystyrol, Polyepoxide, Polysulfon, thermoplastisches Polyurethan (TPU), Cellulosetriacetat (CTA), Polyamid (PA), Polymethylmethacrylat (PMMA), Polyvinylchlorid, Polyvinylacetat, Polyvinylbutyral oder Polydicyclopentadien oder deren Mischungen. Besonders bevorzugt basieren sie auf PC, PET, PA, PMMA und CTA. Materialverbünde können Folienlaminate oder Coextrudate sein. Bevorzugte Materialverbünde sind Duplex- und Triplexfolien aufgebaut nach einem der Schemata A/B, A/B/A oder A/B/C. Besonders bevorzugt sind PC/PMMA, PC/PA, PC/PET, PET/PC/PET und PC/TPU. Vorzugsweise ist Substratschicht D im spektralen Bereich von 400-800 nm transparent.

Als Substratschicht D sind ganz besonders die mechanisch stabilen thermoplastischen Kunststoffsubstrate aus Polyester geeignet, insbesondere solche, wie z.B. Polyethylenterephtalat (PET) oder Polybutylenterephthalatmit einer Schichtdicke von < 200 μm, < 100 μm und > 20 μm, vorzugsweise < 45 μm und >20 μm, die durch Oberflächenmodifikation in ihren Adhäsionseigenschaften reduziert wurden. Hierfür kommen verschiedene Techniken in Betracht. So können anorganische Gleitadditive zugesetzt werden, wie z.B. Kaolin, Ton, Bleicherde, Calciumcarbonat, Siliziumdioxid, Aluminiumoxid, Titanoxid, Calciumphosphat welche in bis zu 3% zugesetzt werden.

Um die optischen Eigenschaften solcher Substrate zu verbessern werden auch Dreischichtkoextrudatfilme verwendet, bei denen nur die äußeren Schichten derartige anorganische Gleitadditive enthalten (z.B. Hostaphan RNK). Weiterhin können auch Silikone auf die Oberflächen aufgebracht werden (z.B. Hostaphan RN30 2PRK), die die Oberflächenspannung und damit die Hafteigenschaften reduzieren. Die ermöglicht ein besonders leichtes Entfernen der Schicht D am Ende der technologischen Kette der Herstellung eines holografischen Produktes mit dem A-B'-C'-Aufbau.

Ebenfalls Gegenstand der Erfindung ist die Verwendung des erfindungsgemäßen Schichtaufbaus zur Herstellung von Hologrammen, insbesondere zur Herstellung von In-Line Hologrammen, Off-Axis Hologrammen, Full-Aperture Transfer Hologrammen, Weißlicht-Transmissionshologrammen, Denisyukhologrammen, Off-Axis Reflektionshologrammen, Edge-Lit Hologrammen sowie holographischen Stereogrammen.

Ein weiterer Gegenstand der Erfindung ist ein versiegeltes holographisches Medium, dass durch das erfinderische Verfahren zur Herstellung eines zumindest teilweise verbundenen Aufbaus zugänglich ist. In einer Ausführungsform enthält das holographische Medium eine ein Hologramm, enthaltende Photopolymerschicht mit einer Schichtdicke von 0.3 μm bis 500 μm, bevorzugt von 0.5 μm bis 200 μm und besonders bevorzugt von 1 μm bis 100 μm. Das holographische Medium enthaltend ein Hologramm ist durch das erfindungsgemäße Verfahren zur Herstellung eines Hologramms in den erfindungsgemäßen Schichtaufbau erhältlich. In die erfindungsgemäßen holographischen Medien können durch entsprechende Belichtungsprozesse für optische Anwendungen im gesamten sichtbaren und nahen UV-Bereich (300-800 nm) Hologramme einbelichtet werden.

Insbesondere kann das Hologramm ein Reflektions-, Transmissions-, In-Line-, Off-Axis-, Full-Aperture Transfer-, Weißlicht-Transmissions-, Denisyuk-, Off-Axis Reflektions- oder Edge-Lit Hologramm sowie ein holographisches Stereogramm und bevorzugt ein Reflektions-, Transmissions- oder Edge-Lit Hologramm sein. Bevorzugt sind Reflektionshologramme, Denisyukhologramme, Transmissionshologramme.

Mögliche optische Funktionen der Hologramme entsprechen den optischen Funktionen von Lichtelementen wie Linsen, Spiegel, Umlenkspiegel, Filter, Streuscheiben, gerichteten Streuelemente, Beugungselemente, Lichtleiter, Lichtlenker (waveguides), Projektionsscheiben und/oder Masken. Zudem können mehrere derartiger optischer Funktionen in einem solchen Hologramm kombiniert werden, z.B. so dass je nach Lichteinfall das Licht in eine andere Richtung abgebeugt wird. So kann man beispielweise mit derartigen Aufbauten autostereoskopische oder holographische elektronische Displays bauen, die es erlauben einen stereoskopischen visuellen Eindruck ohne weitere Hilfsmittel wie z.B. einer Polarisator- oder Shutterbrille zu erleben, der Verwendung in automobilen Head-up Displays oder Head-mounted Displays.

Häufig zeigen diese optischen Elemente eine spezifische Frequenzselektivität, je nachdem wie die Hologramme belichtet wurden und welche Dimensionen das Hologramm hat. Dies ist insbesondere wichtig, wenn man monochromatische Lichtquellen wie LED oder Laserlicht verwendet. So benötigt man ein Hologramm pro Komplementärfarbe (RGB), um Licht frequenzselektiv zu lenken und gleichzeitig vollfarbige Displays zu ermöglichen. Daher sind in bestimmten Displayaufbauten mehrere Hologramme ineinander im Medium zu belichten.

Zudem können mittels der erfindungsgemäßen versiegelten holophaphischen Medien auch holographische Bilder oder Darstellungen, wie zum Beispiel für persönliche Portraits, biometrische Darstellungen in Sicherheitsdokumenten, oder allgemein von Bilder oder Bildstrukturen für Werbung, Sicherheitslabels, Markenschutz, Markenbranding, Etiketten, Designelementen, Dekorationen, Illustrationen, Sammelkarten, Bilder und dergleichen sowie Bilder, die digitale Daten repräsentieren können u.a. auch in Kombination mit den zuvor dargestellten Produkten hergestellt werden. Holographische Bilder können den Eindruck eines dreidimensionalen Bildes haben, sie können aber auch Bildsequenzen, kurze Filme oder eine Anzahl von verschiedenen Objekten darstellen, je nachdem aus welchem Winkel, mit welcher (auch bewegten) Lichtquelle etc. diese beleuchtet wird. Aufgrund dieser vielfältigen Designmöglichkeiten stellen Hologramme, insbesondere Volumenhologramme, eine attraktive technische Lösung für die oben genannten Anwendung

dar. Auch ist es möglich derartige Hologramme zur Speicherung digitaler Daten zu verwenden, wobei verschiedenste Belichtungsverfahren (Shift-, Spatial- oder Angular- Multiplexing) verwendet werden.

Ebenfalls Gegenstand der Erfindung ist eine optische Anzeige, umfassend ein erfindungsgemäßes holographisches Medium.

Beispiele für derartige optische Anzeigen sind bildgebende Anzeigen auf Basis von Flüssigkristallen, organischen lichtemittierenden Dioden (OLED), LED-Displaytafeln, Microelektromechanische Systeme (MEMS) auf Basis von diffraktiver Lichtselektion, Electrowettingdisplays (E-ink) und Plasmabildschirmen. Derartige optische Anzeigen können autostereoskopische und/oder holographische Displays, transmittive und reflektive Projektionsleinwände oder Projektionsscheiben, Displays mit schaltbaren eingeschränkten Abstrahlverhalten für Privacyfilter und bidirektionalen Multiuserbildschirmen, virtuelle Bildschirme, Headup-Displays, Head-mounted Displays, Leuchtsymbole, Warnlampen, Signallampen, Scheinwerfer und Schautafeln sein.

Ebenfalls Gegenstand der Erfindung sind autostereoskopische und/oder holographische Displays, Projektionsleinwände, Projektionsscheiben, Displays mit schaltbaren eingeschränkten Abstrahlverhalten für Privacyfilter und bidirektionalen Multiuserbildschirmen, virtuelle Bildschirme, Headup-Displays, Head-mounted Displays, Leuchtsymbole, Warnlampen, Signallampen, Scheinwerfer und Schautafeln umfassend ein erfindungsgemäßes holographisches Medium.

Noch weitere Gegenstände der Erfindung sind ein Sicherheitsdokument und ein holographisch optisches Element umfassend ein erfindungsgemäßes holographisches Medium.

Darüber hinaus ist auch die Verwendung eines erfindungsgemäßen holographischen Mediums zur Herstellung von Chipkarten, Ausweisdokumenten, 3D-Bildern, Produktschutzetiketten, Labeln, Banknoten oder holographisch optischen Elementen insbesondere für optische Anzeigen sind Gegenstand der Erfindung.

## Beispiele

Im weiteren soll die vorliegende Erfindung detaillierter durch die folgenden Beispiele beschrieben werden.

### Messmethoden:

Festkörpergehalt: Die angegebenen Festkörpergehalte wurden gemäß DIN EN ISO 3251 bestimmt.

### Chemikalien:

In eckigen Klammern ist jeweils, soweit bekannt, die CAS-Nummer angegeben.

### Rohstoffe der Photopolymerschicht B

| | |
|---|---|
| Fomrez® UL 28 | Urethanisierungskatalysator, Handelsprodukt der Momentive Perfor-mance Chemicals, Wilton, CT, USA. |
| Borchi® Kat 22 | Urethanisierungskatalysator, [85203-81-2] Handelsprodukt der OMG Borchers GmbH, Langenfeld, Deutschland. |
| BYK-310 | Silikonhaltiges Oberflächenadditiv, Produkt der BYK-Chemie GmbH, Wesel, Deutschland. |
| Desmodur® N 3900 | Produkt der Covestro AG, Leverkusen, DE, Hexandiisocyanatbasiertes Polyisocyanat, Anteil an Iminooxadiazindion mindestens 30 %, NCO-Gehalt: 23.5%. |
| CGI-909 | Tetrabutylammonium-tris(3-chlor-4-methylphenyl)-(hexyl)borat, [1147315-11-4], Produkt der BASF SE. |

Farbstoff 1 (3,7-Bis(diethylamino)-phenoxazin-5-ium bis(2-ethylhexyl)sulfobernsteinsäureester) wurde wie in WO 2012062655 beschrieben hergestellt.

Polyol 1 wurde wie in WO2015091427 beschrieben hergestellt.

Urethanacrylat 1 gleichzeitig auch RV 2, (Phosphorothioyltris(oxybenzol-4,1-diylcarbamoyloxy-ethan-2,1-diyl)trisacrylat, [1072454-85-3]) wurde wie in WO2015091427 beschrieben hergestellt.

Urethanacrylat 2, (2-({[3-(Methylsulfanyl)phenyl]carbamoyl}oxy)-ethylprop-2-enoat, [1207339-61-4]) wurde wie in WO2015091427 beschrieben hergestellt.

Additiv 1, Bis(2,2,3,3,4,4,5,5,6,6,7,7-dodecafluorheptyl)-(2,2,4-trimethylhexan-1,6-diyl)biscarba-mat [1799437-41-4] wurde wie in WO2015091427 beschrieben hergestellt.

**Rohstoffe der Schutzschicht C**

**Physikalisch trocknende Harze**

| | |
|---|---|
| Mowital B75H - Harz 1 | Ein lineares thermoplastisches, amorphes Polyvinylbutyral mit einem Mw von 240.000 der Fa Kuraray Europe GmbH, Hattersheim, Deutschland |
| Degacryl M547 - Harz 2 | Ein lineares thermoplastisches, amorphes Polymethylmethacrylat mit einem Mw von 500.000 der Fa. Evonik Industies, Marl, Deutschland |
| Desmocoll 400/3 - Harz 3 | Ein lineares thermoplastisches flexibles Polyurethan der Fa. Covestro Deutschland AG, Leverkusen, Deutschland. |
| Mowital B30HH - Harz 4 | Ein lineares thermoplastisches, amorphes Polyvinylbutyral mit einem Mw von 80.000 - 90.000 der Fa. Kuraray Europe GmbH, Hattersheim, Deutschland, |
| Pioloform BL 16-Harz 5 | Ein lineares thermoplastisches, amorphes, niedrig viskoses gemischtes Polyvinylacetal, das aus Polyvinylalkohol mit Butyraldehyd und Acetaldehyd hergestellt wird, mit einem Mw von 50.000-60.000 der Fa. Kuraray Europe GmbH, Hattersheim, Deutschland, |

**Acrylfunktionelle Reaktivverdünner (RV)**

| | |
|---|---|
| Sartomer SR444D - RV 1 | [3524-68-3] Pentaerythrittriacrylat (PETIA) der SARTOMER Division der CRAY VALLEY, Paris, France (Arkema Group). |
| RV 2 | (Phosphorothioyltris(oxybenzol-4,1-diylcarbamoyloxyethan-2,1-diyl)trisacrylat, [1072454-85-3]) wurde wie in WO2015091427 beschrieben hergestellt. |
| Miramer M410 - RV 3 | [94108-97-1] Ditrimethylolpropantetraacrylat der Miwon Specialty Chemical Co., Ltd., Gyeonggi-do, Korea. |
| Sartomer SR494 - RV 4 | 4-fach ethoxyliertes Pentaerythritoltetraacrylat (PPTTA) der SARTOMER Division der CRAY VALLEY, Paris, France (Arkema Group). |
| Ebecryl 8465 - RV 5 | Ein aliphatisches Urethantriacrylat-oligomer der Fa. Allnex, Brüssel, Belgien. |

**Photoinitiatoren**

| | |
|---|---|
| Esacure One - Initiator 1 | [163702-01-0] Oligo-[2-Hydroxy-2-methyl-1-((4-(1-methylvinyl)-phenyl) propanon] der Fa. Lamberti S.p.A., Albizzate, Italien |
| Irgacure 4265 - Initiator 2 | Eine Mischung von Irgacure® TPO (50 Gew.%) und Irgacure® 1173 (50 Gew.%) der Fa. BASF, SE, Ludwigshafen, Deutschland. |

**Additive**

| | |
|---|---|
| BYK 333 | Silikonhaltiges Oberflächenadditiv der Fa. BYK Chemie GmbH, Wesel, Deutschland |

**Lösungsmittel**

| | |
|---|---|
| Butylacetat (BA) | Essigsäurebutylester der Brenntag GmbH, Mülheim an der Ruhr, Deutschland. |

(fortgesetzt)

| | |
|---|---|
| Methoxypropanol (MP-ol) | 1-Methoxy-2-propanol der Brenntag GmbH, Mülheim an der Ruhr, Deutschland. |

**Herstellung holographischen Medien (Photopolymerfolie)**

7.90 g der oben beschriebenen Polyol-Komponente wurden aufgeschmolzen und mit 7.65 g des jeweiligen Urethanacylats 2, 2.57 g des oben beschriebenen Urethanacrylats 1, 5.10 g des oben beschriebenen fluorierten Urethans (Additiv 1), 0.91 g CGI 909, 0.232 g des Farbstoff 1, 0.230 g BYK 310, 0.128 g Fomrez UL 28 und 3.789 g Ethylacetat gemischt, so dass eine klare Lösung erhalten wurde. Anschließend wurden 1.50 g Desmodur® N 3900 zugegeben und erneut gemischt.

Nun gab man diese Lösung in einer Rolle zu Rolle Beschichtungsanlage auf eine 36 μm dicke PET Folie, wo mittels eines Rakels das Produkt in einer Naßschichtdicke von 19 μm appliziert wurde. Bei einer Trocknungstemperatur von 85 °C und einer Trocknungszeit von 5 Minuten wurde die beschichtete Folie getrocknet und anschließend mit einer 40 μm dicken Polyethylenfolie geschützt. Anschließend wurde dieser Film lichtdicht verpackt.

**Herstellung der latenten Schutzschicht C auf Substrat D**

Die in der Tabelle 1 angegebenen Formulierungen wurden derart hergestellt, dass die physikalisch trocknenden Harze, gelöst bei 100°C in dem angegeben organischem Lösemittel und abgekühlt bis Raumtemperatur, mit den Reaktivverdünner gemischt wurden. Dann wurde im Dunkeln die Photoinitiatoren sowie Verlaufshilfsmittel zugegeben.

Tab. 1. Beschichtungsmittel* für die Herstellung der latenten Schutzschicht C

| | Harz | RV | Gewichtsverhältnis zwischen Harz und RV im Lack | Festkörper (Gew.%) und Lösungsmittel der Beschichtungslösung | Viskosität des Lacks bei 23°C [mPas] |
|---|---|---|---|---|---|
| Erfindungsgemäße Beispiele | | | | | |
| 01 | Harz 1 | RV 1 | 50/50 | 20% in MP-ol | 4400 |
| 02 | Harz 1 | RV 2 | 20/80 | 28% in MP-ol | 950 |
| 03 | Harz 2 | RV 2 | 20/80 | 28% in MP-ol | 111 |
| Nicht erfindungsgemäße Beispiele | | | | | |
| N 01 | Harz 3 | RV 2 | 40/60 | 26% in Butylacetat | 1120 |
| N 02 | Harz 3 | RV 3 | 50/50 | 25% in Butylacetat | 2220 |
| N 03 | Harz 3 | RV 4 | 50/50 | 25% in Butylacetat | 2100 |
| N 04 | Harz 2 | RV 4 | 25/75 | 25% in MP-ol | 169 |
| N 05 | Harz 2 | RV 3 | 20/80 | 28% in MP-ol | 82 |
| N 06 | Harz 2 | RV 5 | 20/80 | 28% in MP-ol | 278 |
| N 07 | Harz 4 | RV 2 | 20/80 | 30% in MP-ol | 91 |

(fortgesetzt)

| Nicht erfindungsgemäße Beispiele | | | | | |
|---|---|---|---|---|---|
| N 08 | Harz 5 | RV 2 | 20/80 | 35% in MP-ol | 98 |
| *Alle Beschichtungsmittel beinhalten Initiator 1 (3 Gew.-% zum Festkörper der Lackes), Initiator 2 (1.5 Gew.-% zum Festkörper des Lackes) und Verlaufsmittel (0.2 Gew.-% zum Festkörper des Lackes) | | | | | |

Die wie oben beschrieben hergestellten Lacke wurden in einer Rolle zu Rolle Beschichtungsanlage mittels eines Rakels auf eine 36 μm dicke PET Folie (RNK 36 der Fa. Mitsubishi Polyester Film GmbH, Wiesbaden, Deutschland) appliziert. Bei einer Trocknungstemperatur von 85 °C und einer Trocknungszeit von 5 Minuten wurde die beschichtete Folie getrocknet und anschließend mit einer 40 μm dicken Polyethylenfolie geschützt. Die Beschichtungsdicke betrug in der Regel 15-16 μm. Anschließend wurde dieser Film lichtdicht verpackt.

**Herstellung eines lichtempfindlichen Folienverbunds mit dem Schichtaufbau A-B-C-D**

Die Herstellung einer lichtempfindlichen Folie mit dem Schichtaufbau A-B-C-D, die für das Einschreiben von Hologrammen geeignet ist, beinhaltet zunächst das Laminieren der Seite B des Schichtverbund A-B auf die Seite C des Schichtverbunds C-D. Das erfolgt unter Lichtausschluss durch Zusammenpressen der beiden Folien zwischen den Gummiwalzen eines Laminators. Die Temperatur $T_{Lam}$ der Walzen wurde auf 30 °C, 60 °C oder 90 °C voreingestellt. Das so erhaltene Laminat muss lichtgeschützt gelagert werden.

**Herstellung von Testhologrammen im Schichtaufbau A-B-C-D**

Die Testhologramme zur Bewertung des Schichtaufbaus A-B-C-D wurden wie folgt vorbereitet: die Photopolymerfolien mit dem Schichtaufbau A-B-C-D, wie auch die als Vergleich genommenen Photopolymerfolien mit dem Schichtaufbau A-B, wurden im Dunkeln auf die gewünschte Größe zurechtgeschnitten und mit Hilfe einer Gummiwalze auf eine Glasplatte der Maße 50 mm x 70 mm (3 mm Dicke) laminiert. Die Herstellung von Testhologrammen erfolgt durch eine Testapparatur, die mittels Laserstrahlung der Wellenlänge 532 nm Denisyuk-Reflektionshologramme erzeugt. Die Testapparatur besteht aus einer Laserquelle, einem optischen Strahlführungssystem und einer Halterung für die Glascoupons. Die Halterung für die Glascoupons ist mit einem Winkel von 13° relativ zur Strahlachse montiert. Die Laserquelle generiert die Strahlung, die über einen speziellen optischen Strahlengang auf ca. 5 cm aufgeweitet zum Glascoupon geführt wird, der sich im optischen Kontakt zum Spiegel befand. Das holographierte Objekt war ein ca. 2 cm x 2 cm großer Spiegel, so dass bei der Rekonstruktion des Hologramms die Wellenfront des Spiegels rekonstruiert wurde. Alle Beispiele wurden mit einem grünen 532 nm Laser (Fa. Newport Corp., Irvine, CA, USA, Best.- Nr. EXLSR-532-50-CDRH) belichtet. Mittels Verschlussblende wurde der Aufzeichnungsfilm definiert für 2 Sekunden belichtet. So entsteht einen Folienverbund A-B*-C-D mit einem Hologramm in der Schicht B (Ausnahme - nicht erfindungsgemäßes Beispiel N 05, wobei kein Hologramm entstand)

Anschließend wurden die Proben mit der Substratseite D zur Lampe hin auf das Förderband eines UV-Strahlers gelegt und mit einer Bahngeschwindigkeit von 2,5 m/min zwei Mal belichtet. Als UV Strahler wurde eine eisendotierte Hg-Lampe vom Typ Fusion UV type "D Bulb" No. 558434 KR 85 mit 80 W / $cm^2$ Gesamtleistungsdichte verwendet. Die Parameter entsprechen einer Dosis von 2 x ca. 2.0 J/$cm^2$ (gemessen mit einem Light Bug des Typs ILT 490). Nach dieser Fixierungsschritt entsteht den Folienverbund A-B'-C'-D, wovon die Trägerfolie D abgetrennt werden könnte.

Die Tabelle 2 (Spalten "Haftung der C'-B' im Prozess" und "Entfernbarkeit der Folie D") zeigt die Ergebnisse dieses Schrittes für alle getesteten Schichtaufbauten. Alle erfindungsgemäßen Schutzschichten (01 bis 03) zeigen eine gute Haftung im erfindungsgemäßen Verfahren der Herstellung der Folienverbünde A-B-C-D, A-B*-C-D und A-B'-C'-D. Der folgende Schritt, die Entfernung der Folie D zur Herstellung des Schichtaufbaus A-B'-C' lässt sich ebenfalls bei allen erfindungsgemäßen Beispielen durchführen. Auch die nicht erfindungsgemäße Kompositionen N 01 bis N 06 lassen sich demgemäß verarbeiten. Im Gegenteil dazu zeigen die nicht erfindungsgemäße Zusammensetzungen N 07 und N 08, die mit den niedermolekularen Harzen 4 und 5 hergestellt wurden, keine Haftung, die für o.g. Herstellungsprozess genügend ist.

**Charakterisierung von Schutzschicht C'**

Quantitative Untersuchung der Haftung der Schutzschicht C' auf der Schicht B' der holografischen

Folie A-B' nach ISO 2409:2013-02 (E) (Gitterschnitt-Test):

Es wurde ein Klebebandabriss (verwendetes Klebeband 3M Scotch 898) mit Gitterschnitt (analog zu ISO 2409:2013-02 (E)) durchgeführt. Die Kennwerte variieren von voller Haftung (ISO Kennwert: 0) bis mangelnder (nach ISO 2409:2013-02 (E)) Haftung (ISO Kennwert: 5).

Bewertung der Lösungsmittelbeständigkeit

Die Lösungsmittelbeständigkeit der Beschichtungen wurde üblicherweise mit N-Ethyl-2-pyrrolidon (NEP), Methylethylketon (MEK), 1-Butanol und Ethylacetat (EA) in technischer Qualität geprüft. Das Lösungsmittel wurden mit einem Wattebausch auf die Beschichtung aufgetragen und durch Abdecken gegen Verdunstung geschützt. Es wurde, wenn nicht anders beschrieben, eine Einwirkzeit von 60 Minuten bei ca. 23 °C eingehalten. Nach dem Ende der Einwirkzeit wird der Wattebausch entfernt und die Prüffläche mit einem weichen Tuch gereinigt. Die Abmusterung erfolgt sofort visuell und nach leichten Kratzen mit dem Fingernagel.

Folgende Stufen werden unterschieden:

- 0 = unverändert; keine Veränderung sichtbar; durch Kratzen nicht verletzbar.
- 1 = leichte Anquellung sichtbar, aber durch Kratzen nicht verletzbar.
- 2 = Veränderung deutlich sichtbar, durch Kratzen kaum verletzbar.
- 3 = merklich verändert nach festem Fingernageldruck oberflächlich zerstört.
- 4 = stark verändert nach festem Fingernageldruck bis zum Untergrund durchgekratzt.
- 5 = zerstört; schon beim Abwischen der Chemikalie wird der Lack zerstört; die Testsubstanz ist nicht entfernbar (eingefressen).

Innerhalb dieser Bewertung wird der Test mit den Kennzahlen 0 und 1 üblicherweise bestanden. Kennwerte > 1 stehen für ein "nicht bestanden". Die Ergebnisse sind in der Tabelle 2 zusammengefasst. Alle erfindungsgemäßen Beschichtungen C' aus den Lacken 01 bis 03 weisen ein sehr hohes Maß der Lösungsmittelbeständigkeit auf. Im Gegenteil zeigen die Schichten C' aus der nicht erfindungsgemäße Zusammensetzungen N 01 bis N 03 und N 06 keine ausreichende Lösungsmittelbeständigkeit. Die Schichten aus den Zusammensetzungen N 04 und N 05 bestehen zwar den Lösemitteltest, beeinflussen aber in ihrer latenten (nicht UV-ausgehärteten) Form die Photoempfindlichkeit der Schicht B so stark, dass diese Schicht damit als optisches Aufnahmematerial unbrauchbar wird (Tabelle 3).

**Charakterisierung von Testhologrammen**

Die Hologramme in Schicht B' der Folienverbund A-B'-C', hergestellt durch das erfindungsgemäße Verfahren zur Herstellung von Hologrammen, wurden nun spektroskopisch nach ihrer Qualität untersucht.

Die diffraktive Reflexion solcher Hologramme lässt sich aufgrund der hohen Beugungseffizienz des Volumenhologramms mit sichtbarem Licht mit einem Spektrometer (verwendet wird ein Gerät vom Typ USB 2000, Ocean Optics, Dunedin, FL, USA) in Transmission analysieren und erscheint im Transmissionsspektrum als Peak mit reduzierter Transmission. Über die Auswertung der Transmissionskurve lässt sich die Qualität des Hologramms nach ISO-Norm 17901-1:2015(E) feststellen, dabei werden die folgenden Messgrößen betrachtet, alle Ergebnisse an den erfindungsgemäßen und nicht-erfindungsgemäßen Beispielen sind in der Tabelle 3 zusammengefasst:

FWHM Die Breite des Transmissions-Peaks wird als "Full width at half maximum" (FWHM) in Nanometern (nm) bestimmt.

$$T_{Red} = 100 - T_{peak(A\text{-}B'\text{-}C')} \quad (1)$$

(1) Maximale Tiefe des Transmissions-Peaks, dies entspricht der höchsten Beugungseffizienz. Somit dient $100\text{-}Tp_{eak(A\text{-}B'\text{-}C)}$ als Maß für die Reflektionskraft (oder sichtbare "Stärke" oder "Qualität") des Hologramms.

$\Delta$ T Errechnete Differenz der maximale Tiefe des Transmissions-Peaks des Hologramms im Schichtaufbau A-B'-C' zum Schichtaufbau A-B' als:

$$\Delta T = (100\% - T_{peak(A\text{-}B'\text{-}C')}\%) - (100\% - T_{peak(A\text{-}B')}\%) \quad (2)$$

(2)

$\lambda_{peak}$ Spektrale Lage des Transmissionsminimums des Hologramms in Nanometer (nm).

$\Delta\lambda$ Differenz der Transmissionsminima im Schichtaufbau A-B'-C' zu $\lambda_w$ des Schreiblasers als:

$$\Delta\lambda = \lambda_{peak} - \lambda_w \qquad (3)$$ (3)

Für die nicht erfindungsgemäße Probe V 1 als Bezugspunkt für den Schichtaufbau A-B' liegt die Transmission bei 91%, die FWHM bei 25 nm und das Transmissionsminimum bei 527 nm.

Ein wesentliches Merkmal der Erfindung ist, dass die optischen Kennzahlen FWHM, 100-$T_{min(A-B'-C')}$ und $\lambda_{peak}$ im Aufbau A-B'-C' gar nicht oder nur gering von diesen optischen Kennzahlen im Aufbau A-B abweichen. Erfindungsgemäß beträgt daher die Reduzierung der Transmission ($T_{Red}$ %) für Aufbau A-B-C-D 0 bis 20%, bevorzugt von 0 bis 10% als für Aufbau A-B (Probe V 1 in Tabelle 3). Für die erfindungsgemäßen Proben von 01-1 bis 03-2 liegen die $T_{Red}$-Werte zwischen 76 und 90% und weichen daher nur -1 bis -15% auf Transmissionsskala in Bezug auf die Probe V 1 ab. Die Werte bleiben auch Lagerung bei Raumtemperatur für 3 Tagen unverändert erhalten.

Die Schichten C aus der nicht erfindungsgemäßen Zusammensetzungen N 01 bis N 06 beeinflussen in ihrer latenten (nicht UV-ausgehärteten) Form die Photoempfindlichkeit der Schicht B so stark, dass diese Schicht eine bemerkenswerte Schwäche als optische Aufnahmematerial zeigt. Die $T_{Red}$ -Werte der dort aufgenommenen Hologramme fallen wesentlich niedriger aus. In Falle von N 05 kann überhaupt kein Hologramm aufgenommen werden.

Ein weiterer Aspekt der Qualität der Hologramme betrifft $\lambda_{peak}$. Für die Anwendung der holographischen Materialien in anspruchsvollen optischen Funktionen ist es enorm wichtig, dass $\lambda_{peak}$ des eingeschriebenen Hologramms so wenig wie möglich von $\lambda_w$ des Schreiblasers abweicht. Es ist bevorzugt das $\Delta\lambda$ +/- 10 nm, bevorzugter +/-5 nm, besonders bevorzugt +/-3 nm ist.

Wie die Tabelle 3 zeigt, beträgt $\Delta\lambda$ der Vergleichsprobe V 1 5 nm. Die erfindungsgemäße Proben sehen in diesem Sinne mindestens nicht schlechter und in meisten Fällen sogar vorteilhafter aus. Deren Abweichung von $\Delta\lambda$ beträgt 0 bis 5 nm. Die nicht erfindungsgemäßen Proben weichen deutlich stärker ab.

Tab. 2: Übertragbarkeit der Schutzschicht C auf die holografische Folie A-B und die Schutz-Qualität der Beschichtungen C'

| Schicht C | Probe | $T_{Lam.}$ [°C] | Haftung C'-B' im Prozess | Entfernbarkeit der Folie D | Haftung C'-B' (Gitterschnitt) | Lösemittelbeständigkeit (1h) von C' gegen NEP/MEK/Butanol/EA |
|---|---|---|---|---|---|---|
| ohne# | V 1 | - | - | - | - | 5/5/1/5 (nach 10 min) |
| Erfindungsgemäße Beispiele | | | | | | |
| 01 | 01-1 | 30 | + | + | 2 | 0/0/0/0 |
| 01 | 01-2 | 30 | + | + | 3 | 0/0/0/0 |
| 01 | 01-3 | 60 | + | + | 2 | 0/0/0/0 |
| 01 | 01-4 | 60 | + | + | 4 | 0/0/0/0 |
| 01 | 01-5 | 90 | + | + | 2 | 0/0/0/0 |
| 02 | 02-1 | 30 | + | + | 0 | 0/0/0/0 |
| 02 | 02-2 | 30 | + | + | 0 | 0/0/0/0 |
| 02 | 02-3 | 60 | + | + | 1 | 0/0/0/0 |
| 02 | 02-4 | 60 | + | + | 0 | 0/0/0/0 |
| 02 | 02-5 | 90 | + | + | 0 | 0/0/0/0 |
| 03 | 03-1 | 30 | + | + | 5 | 0/0/0/0 |
| 03 | 03-2 | 30 | + | + | 5 | 0/0/0/0 |
| Nicht erfindungsgemäße Beispiele | | | | | | |
| N 01 | N 01-1 | 60 | + | + | 0 | 4/4/4/4 |
| N 02 | N 02-1 | 60 | + | + | 0 | 4/4/4/4 |
| N 03 | N 03-1 | 30 | + | + | 3 | 5/5/4/5 |
| N 04 | N 04-1 | 30 | + | + | 5 | 0/1/0/0 |
| N 05 | N 05.1 | 30 | + | + | 5 | 0/0/0/0 |
| N 06 | N 06-1 | 30 | + | + | 0 | 5/5/4/5 |

(fortgesetzt)

| | | | | |
|---|---|---|---|---|
| Nicht erfindungsgemäße Beispiele | | | | |
| N 07 | N 07-1 | 30 | - | Keine Bewertung möglich, kein Haftverbund A-B'-C'-D |
| N 07 | N 07-2 | 60 | - | Keine Bewertung möglich, kein Haftverbund A-B'-C'-D |
| N 07 | N 07-3 | 90 | - | Keine Bewertung möglich, kein Haftverbund A-B'-C'-D |
| N 08 | N 08-1 | 30 | - | Keine Bewertung möglich, kein Haftverbund A-B'-C'-D |
| N 08 | N 08-2 | 60 | - | Keine Bewertung möglich, kein Haftverbund A-B'-C'-D |
| N 08 | N 08-3 | 90 | - | Keine Bewertung möglich, kein Haftverbund A-B'-C'-D |
| # Blindprobe | | | | |

Tab. 3: Charakterisierung von Testhologrammen nach a) Einschreiben in den A-B-C-D-Folienverbund, b) Fixierung durch UV-VIS mit ~4 J/cm². Bewertet wird der Folienverbund A-B'-C', der aus in A-B'-C'-D durch Entfernen von D erhalten wird

| Schicht C | Probe | $T_{Lam.}$ [°C] | Charakterisierung von Testhologrammen | | | | | | | | | |
|---|---|---|---|---|---|---|---|---|---|---|---|---|
| | | | 1 h nach Aufbringen der Schutzschicht | | | | | 3 Tage nach Aufbringen der Schutzschicht | | | | |
| | | | 100-$Tp_{eak(A-B'-C')}$ [%] | ΔT [%] | FWHM [nm] | $\lambda_{peak}$ [nm] | Δλ [nm] | 100-Tpeak(A-B'-C') [%] | ΔT [%] | FWHM [nm] | $\lambda_{peak}$ [nm] | Δλ [nm] |
| ohne# | V 1 | - | 91** | - | 25 | 527 | -5 | | | | | |
| Erfindungsgemäße Beispiele | | | | | | | | | | | | |
| 01 | 01-1 | 30 | 76 | -15 | 22 | 530 | -2 | 76 | -15 | 22 | 529 | -3 |
| 01 | 01-2 | 30 | 81 | -10 | 23 | 530 | -2 | 85 | -6 | 22 | 529 | -3 |
| 01 | 01-3 | 60 | 83 | -8 | 18 | 528 | -4 | 81 | -10 | 18 | 527 | -5 |
| 01 | 01-4 | 60 | 84 | -7 | 24 | 530 | -2 | 84 | -7 | 22 | 529 | -3 |
| 01 | 01-5 | 90 | 83 | -8 | 16 | 529 | -3 | 83 | -8 | 16 | 528 | -4 |
| 02 | 02-1 | 30 | 83 | -8 | 17 | 527 | -5 | 86 | -5 | 17 | 527 | -5 |
| 02 | 02-2 | 30 | 88 | -3 | 19 | 529 | -3 | 87 | -4 | 19 | 530 | -2 |
| 02 | 02-3 | 60 | 83 | -8 | 16 | 530 | -2 | 81 | -10 | 15 | 530 | -2 |
| 02 | 02-4 | 60 | 90 | -1 | 19 | 529 | -3 | 90 | -1 | 19 | 529 | -3 |
| 02 | 02-5 | 90 | 83 | -8 | 16 | 528 | -4 | 83 | -8 | 16 | 528 | -4 |
| 03 | 03-1 | 30 | 80 | -11 | 15 | 532 | 0 | 82 | -9 | 15 | 533 | +1 |
| 03 | 03-2 | 30 | 85 | -6 | 17 | 533 | +1 | 84 | -7 | 16 | 534 | +2 |
| Nicht erfindungsgemäße Beispiele | | | | | | | | | | | | |
| N 01 | N01-1 | 60 | 70 | -21 | 15 | 536 | +4 | 78 | -13 | 15 | 537 | +5 |
| N 02 | N02-1 | 60 | 25 | -66 | 13 | 529 | -3 | - | - | - | - | - |
| N 03 | N03-1 | 30 | 67 | -24 | 17 | 534 | +2 | 56 | -35 | 15 | 523 | -9 |
| N 04 | N04-1 | 30 | 41 | -50 | 11 | 545 | +13 | 39 | -52 | 11 | 544 | +12 |
| N 05 | N05-1 | 30 | * | | | | | * | | | | |
| N 06 | N06-1 | 30 | 29 | -62 | 13 | 560 | +28 | 23 | -68 | 14 | 559 | +27 |
| # Blindprobe; *kein Hologramm einschreibbar; **im Schichtaufbau A-B' gemessen | | | | | | | | | | | | |

## Patentansprüche

1. Schichtaufbau umfassend eine härtbare Schutzschicht C und einer mit der Schutzschicht C zumindest teilweise verbundenen, flächig vorliegenden Photopolymerschicht B, **dadurch gekennzeichnet, dass** die Schutzschicht C

I) mindestens ein thermoplastisches Harz ausgewählt aus der Gruppe bestehend aus Polyvinylbutyral mit $M_w \geq 100.000$ g/mol oder amorphem Polymethylmethacrylat mit $M_w \geq 100.000$ g/mol;
II) mindestens einen Reaktivverdünner ausgewählt aus der Gruppe bestehend aus Pentaerythrit-triacrylat, Dipentaerythritpentaacrylat, Dipentaerythrithexaacrylat, Verbindung gemäß Formel (Ia)

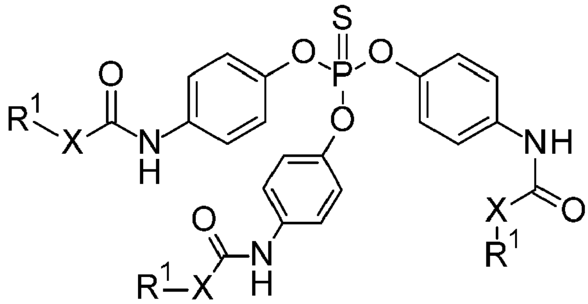

Formel (Ia),

Verbindung gemäß Formel (Ib)

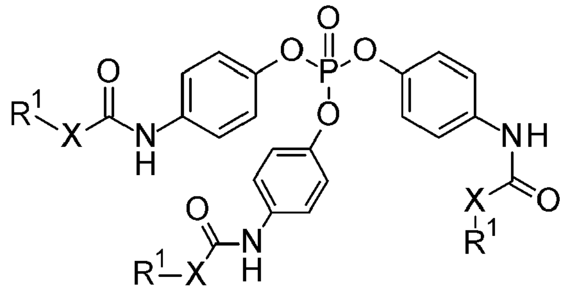

Formel (Ib),

Verbindung gemäß Formel (Ic)

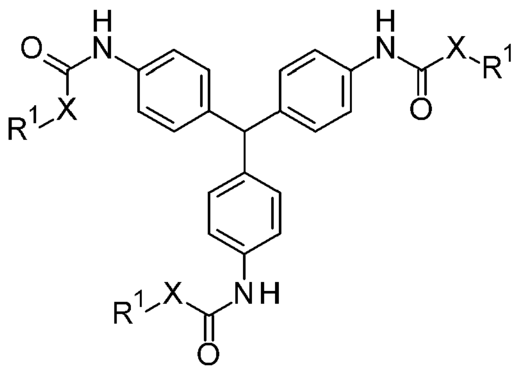

Formel (Ic),

wobei in den Formeln (Ia) bis (Ic)

$R^1$ unabhängig voneinander jeweils eine strahlenhärtbare Gruppe ist und
X unabhängig voneinander jeweils eine Einfachbindung zwischen $R^1$ und C=O oder ein linearer, verzweigter oder cyclischer gegebenenfalls heteroatomhaltiger und/oder gegebenenfalls durch funktionelle Gruppen substituierter Kohlenwasserstoffrest ist,

Verbindung gemäß Formel (II)

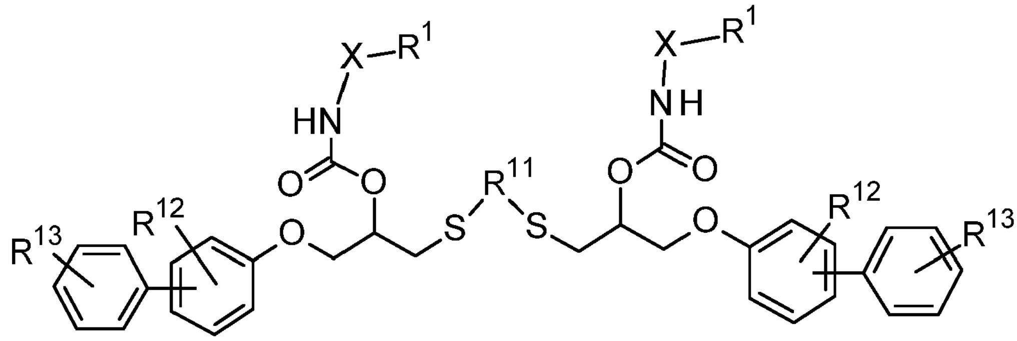

Formel (II),

wobei in der Formel (II)

$R^1$ und X wie in Formel (Ia) - (Ic) definiert ist,
$R^{11}$ ein linearer oder verzweigter, gegebenenfalls mit Heteroatomen substituierter aliphatischer, aromatischer oder araliphatischer Rest ist,
$R^{12}$ jeweils unabhängig voneinander bis zu vier Substituenten ausgewählt aus Methyl, Ethyl, Propyl, n-Butyl, tert.-Butyl, Chlor, Brom, Iod, Methylthio, Phenyl und / oder Phenylthio ist,
$R^{13}$ jeweils unabhängig voneinander bis zu fünf Substituenten ausgewählt aus Methyl, Ethyl, Propyl, n-Butyl, tert.-Butyl, Chlor, Brom, Iod, Methylthio, Phenyl und / oder Phenylthio ist,

Verbindung gemäß Formel (III)

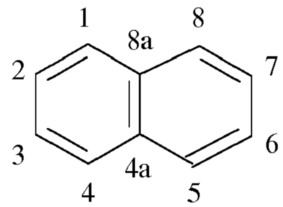

Formel (III),

i) die an wenigstens einem der Kohlenstoffatome 1, 2, 3, 4, 5, 6, 7, 8 mit einem Rest $R_{Acryl}$ der Formel (IV) substituiert ist,

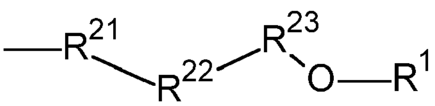

Formel (IV),

wobei in der Formel (IV)

$R^1$ wie in Formel (Ia) - (Ic) definiert ist,
$R^{21}$ Sauerstoff oder Schwefel ist,
$R^{22}$ eine Carbonamid (-C(O)N-) oder eine Carbonester (-C(O)O-) oder eine Sulfonamid ($-SO_2N-$) Gruppe ist,
$R^{23}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist, und

ii) die Verbindung der Formel (III) an wenigstens einem weiteren Kohlenstoffatom 1, 2, 3, 4, 5, 6, 7, 8 mit einem Rest der Formel (V) substituiert ist,

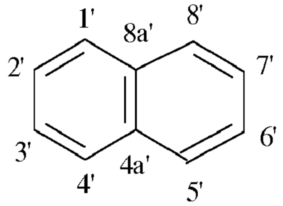

Formel (V),

wobei in der Formel (V)
die Kohlenstoffatome der Verbindung der Formel (V) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer beliebig substituierten Carbamoyl-Gruppe, die auch verbrückend an einen Rest der Formel (III) gebunden sein kann, oder einer Trifluormethyl-Gruppe oder einer Trifluormethoxy-Gruppe oder einem Rest $R_{Acryl'}$ der Formel (VI),

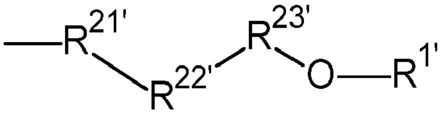

Formel (VI),

wobei in der Formel (VI)

$R^{1'}$ wie $R^1$ in Formel (IV) definiert ist,
$R^{21'}$ Sauerstoff oder Schwefel ist,
$R^{22'}$ eine Carbonamid (-C(O)N-) oder eine Carbonester (-C(O)O-) oder eine Sulfonamid ($-SO_2N-$) Gruppe ist,
$R^{23'}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist,

iii) die übrigen Kohlenstoffatome der Verbindung der Formel (III) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer Trifluormethyl-Gruppe oder einer Trifluormethoxy-Gruppe substituiert sind,

und Verbindung der Formel (VII)

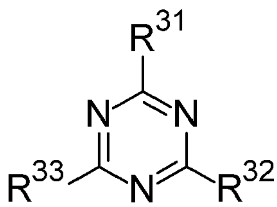

(VII),

wobei in der Formel (VII)
$R^{31}$, $R^{32}$, $R^{33}$ jeweils unabhängig voneinander OH, Halogen oder ein organischer Rest sind, wobei wenigstens einer der Reste ein eine strahlungshärtende Gruppe aufweisender organischer Rest ist; und
III) mindestens einen Photoinitiator umfasst.

2. Schichtaufbau nach Anspruch 1, **dadurch gekennzeichnet, dass** die Photopolymerschicht B auf einer Substratschicht A vorliegt, wobei die Photopolymerschicht B auf einer Seite zumindest teilweise mit der Substratschicht A verbunden ist und die Photopolymerschicht B auf der anderen Seite zumindest teilweise mit der Schutzschicht C verbunden ist.

**3.** Schichtaufbau nach Anspruch 1 oder 2, **dadurch gekennzeichnet, dass** die Schutzschicht C auf einer Substratschicht D vorliegt, wobei die Schutzschicht C auf einer Seite zumindest teilweise mit der Substratschicht D verbunden ist und die Schutzschicht C auf der anderen Seite zumindest teilweise mit der Photopolymerschicht B verbunden ist.

**4.** Schichtaufbau nach einem der vorherigen Ansprüche, **dadurch gekennzeichnet, dass** der Schichtaufbau aus mindestens vier zumindest teilweise miteinander verbunden Schichten besteht, wobei die Schichten in der Reihenfolge Substratschicht A, Photopolymerschicht B, Schutzschicht C und Substratschicht D unmittelbar aufeinander angeordnet sind.

**5.** Verfahren zur Herstellung eines Schichtaufbaus gemäß Anspruch 1, wobei auf eine Photopolymerschicht B, eine Schutzschicht C aufgebracht wird, **dadurch gekennzeichnet, dass** die Schutzschicht C

I) mindestens ein thermoplastisches Harz ausgewählt aus der Gruppe bestehend aus Polyvinylbutyral mit $M_w \geq 100.000$ g/mol oder amorphem Polymethylmethacrylat mit $M_w \geq 100.000$ g/mol;
II) mindestens einen Reaktivverdünner ausgewählt aus der Gruppe bestehend aus Pentaerythrit-triacrylat, Dipentaerythritpentaacrylat, Dipentaerythrithexaacrylat, Verbindung gemäß Formel (Ia)

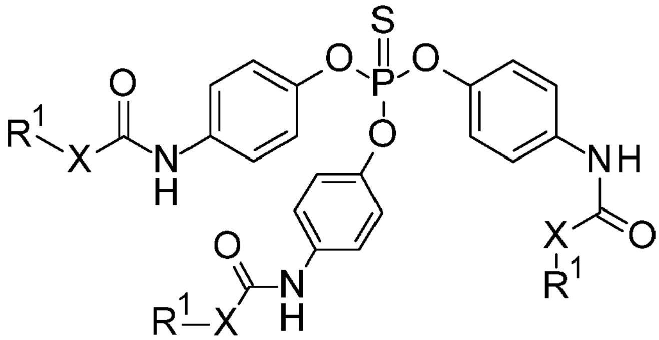

Formel (Ia),

Verbindung gemäß Formel (Ib)

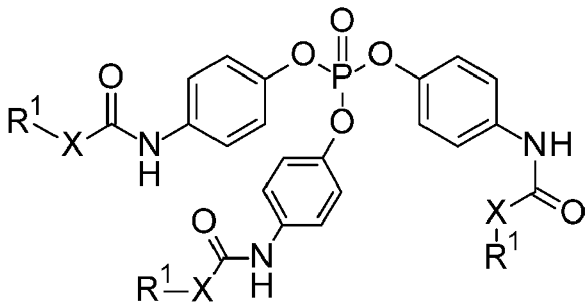

Formel (Ib),

Verbindung gemäß Formel (Ic)

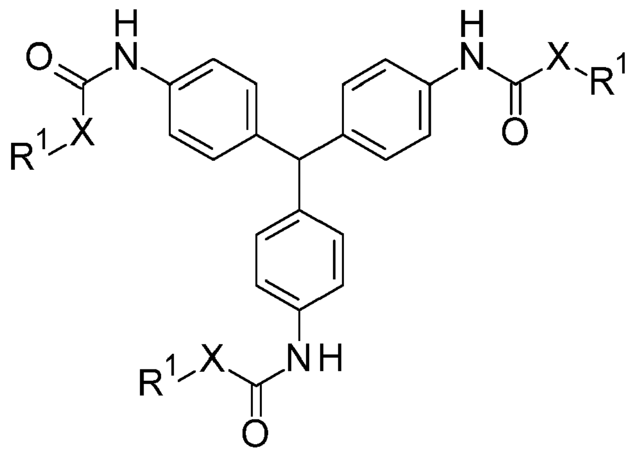

Formel (Ic),

wobei in den Formeln (Ia) bis (Ic)

$R^1$ unabhängig voneinander jeweils eine strahlenhärtbare Gruppe ist und
X unabhängig voneinander jeweils eine Einfachbindung zwischen $R^1$ und C=O oder ein linearer, verzweigter oder cyclischer gegebenenfalls heteroatomhaltiger und/oder gegebenenfalls durch funktionelle Gruppen substituierter Kohlenwasserstoffrest ist,

Verbindung gemäß Formel (II)

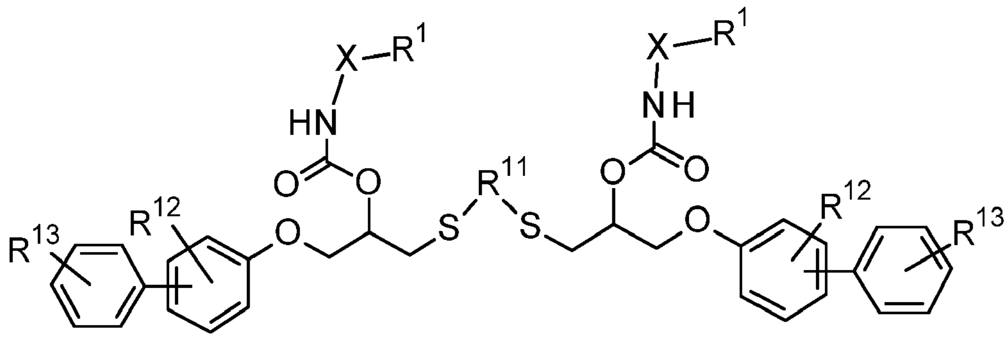

Formel (II),
wobei in der Formel (II)

$R^1$ und X wie in Formel (Ia) - (Ic) definiert ist,
$R^{11}$ ein linearer oder verzweigter, gegebenenfalls mit Heteroatomen substituierter aliphatischer, aromatischer oder araliphatischer Rest ist,
$R^{12}$ jeweils unabhängig voneinander bis zu vier Substituenten ausgewählt aus Methyl, Ethyl, Propyl, n-Butyl, tert.-Butyl, Chlor, Brom, Iod, Methylthio, Phenyl und / oder Phenylthio ist,
$R^{13}$ jeweils unabhängig voneinander bis zu fünf Substituenten ausgewählt aus Methyl, Ethyl, Propyl, n-Butyl, tert.-Butyl, Chlor, Brom, Iod, Methylthio, Phenyl und / oder Phenylthio ist,

Verbindung gemäß Formel (III)

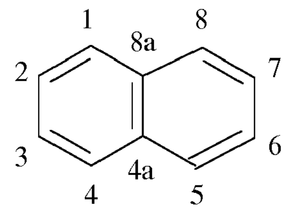

Formel (III),

i) die an wenigstens einem der Kohlenstoffatome 1, 2, 3, 4, 5, 6, 7, 8 mit einem Rest $R_{Acryl}$ der Formel (IV) substituiert ist,

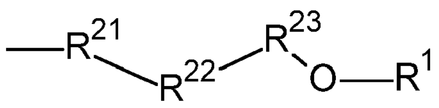

Formel (IV),

wobei in der Formel (IV)

- $R^1$ wie in Formel (Ia) - (Ic) definiert ist,
- $R^{21}$ Sauerstoff oder Schwefel ist,
- $R^{22}$ eine Carbonamid (-C(O)N-) oder eine Carbonester (-C(O)O-) oder eine Sulfonamid ($-SO_2N-$) Gruppe ist,
- $R^{23}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist, und

ii) die Verbindung der Formel (III) an wenigstens einem weiteren Kohlenstoffatom 1, 2, 3, 4, 5, 6, 7, 8 mit einem Rest der Formel (V) substituiert ist,

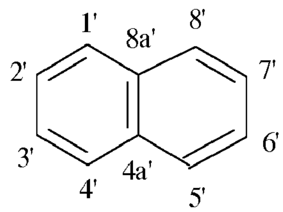

Formel (V),

wobei in der Formel (V)
die Kohlenstoffatome der Verbindung der Formel (V) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer beliebig substituierten Carbamoyl-Gruppe, die auch verbrückend an einen Rest der Formel (III) gebunden sein kann, oder einer Trifluormethyl-Gruppe oder einer Trifluormethoxy-Gruppe oder einem Rest $R_{Acryl'}$ der Formel (VI),

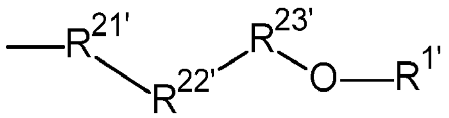

Formel (VI),

wobei in der Formel (VI)

- $R^{1'}$ wie $R^1$ in Formel (IV) definiert ist,
- $R^{21'}$ Sauerstoff oder Schwefel ist,

$R^{22'}$ eine Carbonamid (-C(O)N-) oder eine Carbonester (-C(O)O-) oder eine Sulfonamid ($-SO_2N-$) Gruppe ist,
$R^{23'}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist,

iii) die übrigen Kohlenstoffatome der Verbindung der Formel (III) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer Trifluormethyl-Gruppe oder einer Trifluormethoxy-Gruppe substituiert sind,

und Verbindung der Formel (VII)

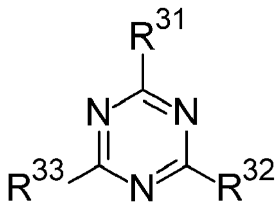

(VII),

wobei in der Formel (VII)
$R^{31}$, $R^{32}$, $R^{33}$ jeweils unabhängig voneinander OH, Halogen oder ein organischer Rest sind, wobei wenigstens einer der Reste ein eine strahlungshärtende Gruppe aufweisender organischer Rest ist; und
III) mindestens einen Photoinitiator umfasst.

**6.** Verfahren nach Anspruch 5, **dadurch gekennzeichnet, dass** in einem ersten Schritt die Photopolymerschicht B auf einer Substratschicht A aufgetragen wird, um einen Schichtverbund A-B zu ergeben, in einem zweiten Schritt die Schutzschicht C auf einer Substratschicht D aufgetragen wird, um einen Schichtverbund C-D zu ergeben und in einem dritten Schritt der Schichtverbund A-B mit dem Schichtverbund C-D flächig verbunden wird um einen Schichtverbund A-B-C-D zu ergeben, wobei die Schichtverbund A-B mit dem Schichtverbund C-D vorzugsweise durch Laminierung verbunden wird.

**7.** Verfahren zur Herstellung eines Hologramms umfassend die folgenden Schritte:

a) Bereitstellen eines mehrschichtigen Aufzeichnungsmaterials enthaltend einen Schichtverbund A-B-C-D umfassend

I) eine Substratschicht A;
II) eine Photopolymerschicht B;
III) eine Schutzschicht C, umfassend

IIIa) mindestens ein thermoplastisches Harz ausgewählt aus der Gruppe bestehend aus Polyvinylbutyral mit $M_w \geq 100.000$ g/mol oder amorphem Polymethylmethacrylat mit $M_w \geq 100.000$ g/mol,
IIIb) mindestens einen Reaktivverdünner ausgewählt aus der Gruppe bestehend aus Pentaerythrittriacrylat, Dipentaerythritpentaacrylat, Dipentaerythrithexaacrylat, Verbindung gemäß Formel (Ia)

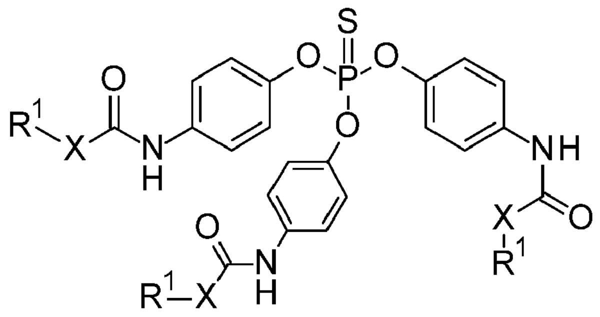

Formel (Ia),

Verbindung gemäß Formel (Ib)

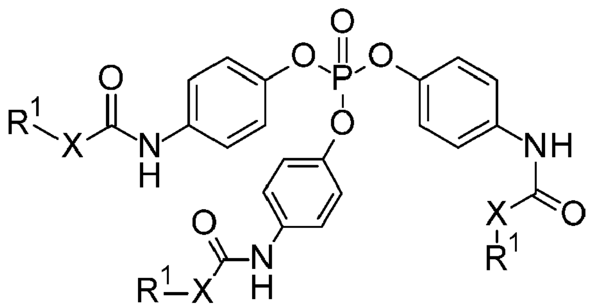

Formel (Ib),

Verbindung gemäß Formel (Ic)

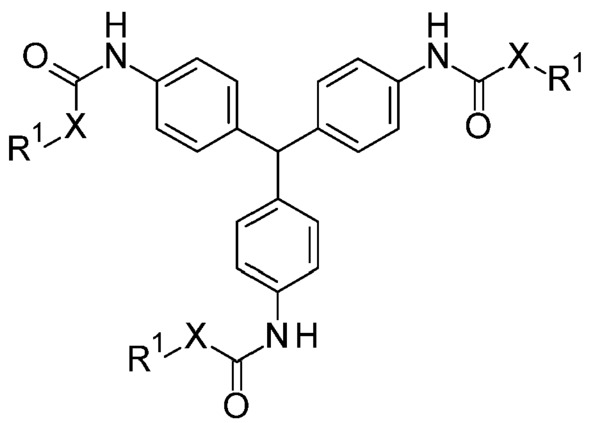

Formel (Ic),

wobei in den Formeln (Ia) bis (Ic)

$R^1$ unabhängig voneinander jeweils eine strahlenhärtbare Gruppe ist und
X unabhängig voneinander jeweils eine Einfachbindung zwischen $R^1$ und C=O oder ein linearer, verzweigter oder cyclischer gegebenenfalls heteroatomhaltiger und/oder gegebenenfalls durch funktionelle Gruppen substituierter Kohlenwasserstoffrest ist,

Verbindung gemäß Formel (II)

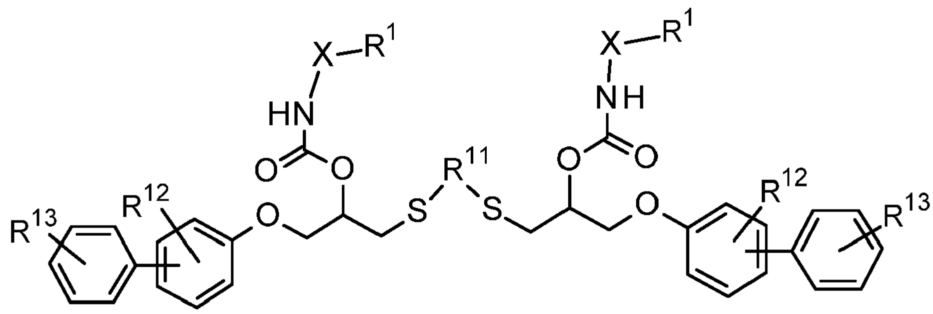

Formel (II),

wobei in der Formel (II)

$R^1$ und X wie in Formel (Ia) - (Ic) definiert ist,
$R^{11}$ ein linearer oder verzweigter, gegebenenfalls mit Heteroatomen substituierter aliphatischer, aromatischer oder araliphatischer Rest ist,
$R^{12}$ jeweils unabhängig voneinander bis zu vier Substituenten ausgewählt aus Methyl, Ethyl, Propyl, n-Butyl, tert.-Butyl, Chlor, Brom, Iod, Methylthio, Phenyl und / oder Phenylthio ist,
$R^{13}$ jeweils unabhängig voneinander bis zu fünf Substituenten ausgewählt aus Methyl, Ethyl, Propyl, n-Butyl, tert.-Butyl, Chlor, Brom, Iod, Methylthio, Phenyl und / oder Phenylthio ist,

Verbindung gemäß Formel (III)

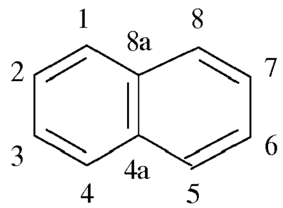

Formel (III),

i) die an wenigstens einem der Kohlenstoffatome 1, 2, 3, 4, 5, 6, 7, 8 mit einem Rest $R_{Acryl}$ der Formel (IV) substituiert ist,

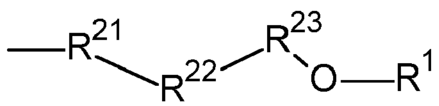

Formel (IV),

wobei in der Formel (IV)

$R^1$ wie in Formel (Ia) - (Ic) definiert ist,
$R^{21}$ Sauerstoff oder Schwefel ist,
$R^{22}$ eine Carbonamid (-C(O)N-) oder eine Carbonester (-C(O)O-) oder eine Sulfonamid ($-SO_2N-$) Gruppe ist,
$R^{23}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist, und

ii) die Verbindung der Formel (III) an wenigstens einem weiteren Kohlenstoffatom 1, 2, 3, 4, 5, 6, 7, 8 mit einem Rest der Formel (V) substituiert ist,

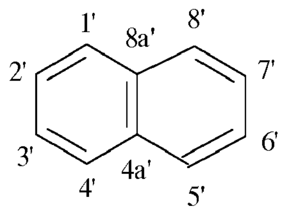

Formel (V),

wobei in der Formel (V)
die Kohlenstoffatome der Verbindung der Formel (V) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer beliebig substituierten Carbamoyl-Gruppe, die auch verbrückend an einen Rest der Formel (III) gebunden sein kann, oder einer Trifluormethyl-Gruppe oder einer Trifluormethoxy-Gruppe oder einem Rest $R_{Acryl}$' der Formel (VI),

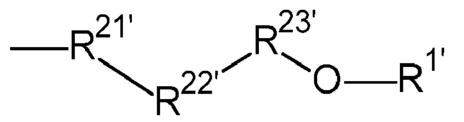

Formel (VI),

wobei in der Formel (VI)

$R^{1'}$ wie $R^1$ in Formel (IV) definiert ist,
$R^{21'}$ Sauerstoff oder Schwefel ist,
$R^{22'}$ eine Carbonamid (-C(O)N-) oder eine Carbonester (-C(O)O-) oder eine Sulfonamid ($-SO_2N-$) Gruppe ist,
$R^{23'}$ ein gesättigter oder ungesättigter oder linearer oder verzweigter gegebenenfalls substituierter 2-10 C-Atome aufweisender Rest oder ein bis zu fünf ($-CH_2-CH_2-O-$)- oder ($-C(CH_3)H-CH_2-O-$)-Gruppen aufweisender Polyether oder ein bis zu fünf Stickstoff-Atome aufweisendes Polyamin ist,

iii) die übrigen Kohlenstoffatome der Verbindung der Formel (III) jeweils unabhängig mit Wasserstoff, Halogen, einer Cyano-Gruppe, einer Nitro-Gruppe oder einer gegebenenfalls substituierten Alkyl-, Alkenyl-, Alkinyl-, Aralkyl-, Aryl- oder Heteroaryl-Gruppe oder einer gegebenenfalls substituierten Alkoxy- oder Alkylthio-Gruppe oder einer Trifluormethyl-Gruppe oder einer Trifluormethoxy-Gruppe substituiert sind, und

Verbindung der Formel (VII)

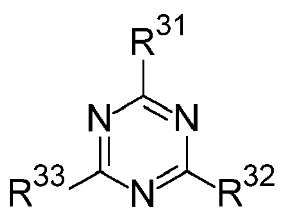

(VII),

wobei in der Formel (VII)
$R^{31}$, $R^{32}$, $R^{33}$ jeweils unabhängig voneinander OH, Halogen oder ein organischer Rest sind, wobei wenigstens einer der Reste ein eine strahlungshärtende Gruppe aufweisender organischer Rest ist; und
IIIc) mindestens einen Photoinitiator umfasst, und

IV) eine Substratschicht D,

wobei die Schichten in der Reihenfolge Substratschicht A, Photopolymerschicht B, Schutzschicht C und Substratschicht D unmittelbar aufeinander angeordnet sind;

b) Einbelichten eines Hologramms in die Photopolymerschicht B, sodass ein Schichtverbund A-B*-C-D entsteht, wobei B* eine Photopolymerschicht mit einem eingeschriebenen Hologramm ist;

c) Beaufschlagen des Schichtverbunds A-B*-C-D aus Schritt (b) mit aktinischer Strahlung, vorzugsweise UV-Strahlung, sodass ein Schichtverbund A-B'-C'-D entsteht, wobei B' die geblichene, durchpolymerisierte und nicht mehr photoempfindliche Photopolymerschicht B mit einem fixiertem Hologramm ist und C' die ausgehärtete Schutzschicht C ist; und

d) Delaminieren der Substratschicht D des Schichtverbunds A-B'-C'-D aus Schritt (c), sodass ein Schichtverbund A-B'-C" entsteht.

**8.** Schichtaufbau nach einem der Ansprüche 1-4, oder Verfahren nach einem der Ansprüche 5-7, **dadurch gekennzeichnet, dass** der Reaktivverdünner Pentaerythrit-triacrylat, eine Verbindung gemäß Formel (Ia), (Ib), (Ic), (II), (III), (VII) und/oder Mischungen davon ist, vorzugsweise Pentaerythrit-triacrylat und eine Verbindung gemäß Formel (Ia) und/oder Mischungen davon, noch bevorzugter eine Verbindung gemäß Formel (Ia).

**9.** Schichtaufbau nach einem der Ansprüche 1-4 oder 8, oder Verfahren nach einem der Ansprüche 5-8, **dadurch gekennzeichnet, dass** die Schutzschicht C ein Dicke von 1 bis 100 μm, bevorzugt von 2 bis 50 μm und ganz besonders bevorzugt von 3 bis 25 μm aufweist.

**10.** Schichtaufbau nach einem der Ansprüche 1-4, 8 oder 9, oder Verfahren nach einem der Ansprüche 5-9, **dadurch gekennzeichnet, dass** die Schutzschicht C weiterhin einen UV-Absorber enthält, vorzugsweise in einer Menge von 0.01 bis 10 Gew.-%, bevorzugter in einer Menge von 0.1 bis 5 Gew.-%, jeweils bezogen auf das Gesamtgewicht der Schutzschicht C.

**11.** Schichtaufbau nach einem der Ansprüche 1-4, 8, 9 oder 10 oder Verfahren nach einem der Ansprüche 5-10, **dadurch gekennzeichnet, dass** die Photopolymerschicht B Polyurethan-Matrixpolymere, Acrylat-Schreibmonomere und Photoinitiatoren enthält, vorzugsweise wobei die Matrixpolymere vernetzt sind, bevorzugter wobei die Matrixpolymere dreidimensional vernetzt sind.

**12.** Versiegeltes holographisches Medium umfassend einen Schichtaufbau A-B'-C' erhältlich aus einem Verfahren nach einem der Ansprüche 7-11.

**13.** Optische Anzeige, umfassend ein versiegeltes holographisches Medium nach Anspruch 12, wobei die optische Anzeige vorzugsweise ausgewählt sind aus der Gruppe bestehend aus Autostereoskopische und/oder holographische Displays, Projektionsleinwände, Projektionsscheiben, Displays mit schaltbaren eingeschränkten Abstrahlverhalten für Privacyfilter und bidirektionalen Multiuserbildschirmen, virtuelle Bildschirme, Headup-Displays, Headmounted Displays, Leuchtsymbole, Warnlampen, Signallampen, Scheinwerfer und Schautafeln.

**14.** Sicherheitsdokument, umfassend ein versiegeltes holographisches Medium nach Anspruch 12.

**15.** Verwendung eines Schichtaufbaus nach einem der Ansprüche 1-4, 8, 9, 10 oder 11 zur Herstellung von Hologrammen, insbesondere zur Herstellung von In-Line Hologrammen, Off-Axis Hologrammen, Full-Aperture Transfer Hologrammen, Weißlicht-Transmissionshologrammen, Denisyukhologrammen, Off-Axis Reflektionshologrammen, Edge-Lit Hologrammen sowie holographischen Stereogrammen.

Europäisches Patentamt
European Patent Office
Office européen des brevets

# EUROPÄISCHER RECHERCHENBERICHT

Nummer der Anmeldung
EP 17 17 0199

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JP 2002 358018 A (DAINIPPON PRINTING CO LTD) 13. Dezember 2002 (2002-12-13)<br>* hologram transfer foil;<br>Beispiel 1 *<br>----- | 1-15 | INV.<br>G11B7/24044<br>G03H1/02<br>B42D25/328 |
| A | US 2013/182301 A1 (TSUKADA DAI [JP] ET AL) 18. Juli 2013 (2013-07-18)<br>* Volume hologram transfer foil;<br>Beispiele 1, comp. 4 *<br>----- | 1-15 | |
| A | US 2011/318567 A1 (HILDENBRAND KARLHEINZ [DE] ET AL) 29. Dezember 2011 (2011-12-29)<br>* Anti-fog, anti-reflective coating;<br>Beispiele 2,3 *<br>----- | 1-15 | |

RECHERCHIERTE SACHGEBIETE (IPC)
G11B
G03H
B42D

Der vorliegende Recherchenbericht wurde für alle Patentansprüche erstellt

1

| Recherchenort | Abschlußdatum der Recherche | Prüfer |
|---|---|---|
| Den Haag | 17. Oktober 2017 | Stabel, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 17 17 0199

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-10-2017

| Im Recherchenbericht angeführtes Patentdokument | Datum der Veröffentlichung | Mitglied(er) der Patentfamilie | Datum der Veröffentlichung |
|---|---|---|---|
| JP 2002358018 A | 13-12-2002 | JP 4803333 B2 | 26-10-2011 |
| | | JP 2002358018 A | 13-12-2002 |
| US 2013182301 A1 | 18-07-2013 | CN 103119522 A | 22-05-2013 |
| | | EP 2624074 A1 | 07-08-2013 |
| | | JP 5884314 B2 | 15-03-2016 |
| | | JP 2012093713 A | 17-05-2012 |
| | | US 2013182301 A1 | 18-07-2013 |
| | | WO 2012043014 A1 | 05-04-2012 |
| US 2011318567 A1 | 29-12-2011 | CN 102317381 A | 11-01-2012 |
| | | EP 2396373 A1 | 21-12-2011 |
| | | ES 2491615 T3 | 08-09-2014 |
| | | JP 5819198 B2 | 18-11-2015 |
| | | JP 2012517513 A | 02-08-2012 |
| | | KR 20110124232 A | 16-11-2011 |
| | | KR 20170070278 A | 21-06-2017 |
| | | US 2011318567 A1 | 29-12-2011 |
| | | WO 2010091802 A1 | 19-08-2010 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011054797 A
- WO 2011067057 A
- EP 2613318 A1
- EP 2962302 A1
- EP 2772917 A1
- EP 2786378 A1
- US 4994347 A
- EP 0223587 A
- WO 2012062655 A
- US 2012062658 A
- WO 2015091427 A1
- WO 2012020061 A1
- WO 2016091965 A1
- SU 20069901976
- JP 58004027 B
- WO 2015091427 A


### In der Beschreibung aufgeführte Nicht-Patentliteratur


- **CUNNINGHAM et al.** *RadTech'98 North America UV/EB Conference Proceedings,* 19. April 1998
- Chemistry & Technology of UV & EB Formulations For Coatings, Inks & Paints. SITA Technology, 1991, vol. 3, 61-328